# EUROPEAN PATENT SPECIFICATION

(11) **EP 1 919 096 B1**
(45) Date of publication and mention of the grant of the patent: **03.03.2010**
(21) Application number: 06022647.9
(22) Date of filing: 30.10.2006
(51) Int. Cl.: H04B 7/06

(54) **Receiver apparatus, transmitter apparatus and methods for receiving and transmitting for controlling a precoding operation in a transmitter in a MIMO transmission**
Empfänger, Sender sowie Übertragungs- bzw. Empfangsverfahren zur Steuerung einer Vorkodierung in einem Sender in einer MIMO-Übertragung
Récepteur, émetteur et procédés de réception et de transmission pour contrôler un précodage dans un émetteur dans une transmission du type MIMO

(43) Date of publication of application: 07.05.2008
(73) Proprietor: NTT DoCoMo, Inc., Chiyoda-ku Tokyo 100-6150 (JP)
(72) Inventor: Abe, Tetsushi, 80538 München (DE)
(74) Representative: Zinkler, Franz

(56) References cited:
- WO-A-2006/075220
- US-B1- 6 754 473
- JINHO CHOI ET AL: "An Adaptive Technique for Transmit Antenna Diversity With Feedback" IEEE TRANSACTIONS ON VEHICULAR TECHNOLOGY, IEEE SERVICE CENTER, PISCATAWAY, NJ, US, vol. 51, no. 4, July 2002 (2002-07), XP011080668 ISSN: 0018-9545

## Description

The present invention is in the field of e.g. multiple-input-multiple-output (MIMO) transmission as it is more and more used in mobile communication scenarios and as considered for future mobile communication systems.

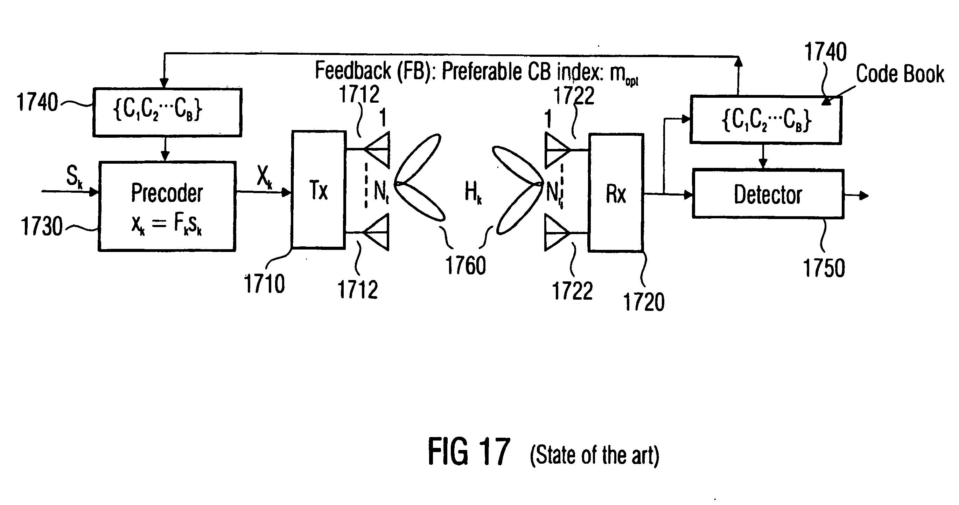

MIMO-systems in general can significantly improve system capacity of mobile communication systems. This is for example achieved as MIMO-systems can simultaneously transmit and receive multiple data streams using multiple transmit and receive antennas. Fig. 17 shows a general MIMO-system 1700. The scenario shows a transmit unit 1710 utilizing Nₜ transmit antennas 1712. The signals transmitted by the transmit antennas 1712 are received by a receiver unit 1720 utilizing Nᵣ receive antennas 1722. Between the transmit antennas 1712 and the receive antennas 1722 there is a mobile radio channel, which is labeled with ₖ in Fig. 17. The signals which are transmitted by the transmit unit 1710 are labeled **x**ₖ and are precoded by a precoding unit 1730. The precoding unit 1730 applies a precoding matrix **F**ₖ to the actual data streams **sₖ** which are to be transmitted.

The precoding matrix **F**ₖ is based on a feedback received from the receiver side, which preferably uses a codebook in order to feed back an index mₒₚₜ. In the scenario depicted in Fig. 17 these indices are determined from a codebook 1740, which is available on the transmitter and on the receiver side. The received signals are detected by a detector 1750 on the receiver side, which carries out channel estimation, i.e. the channel **H**ₖ is estimated, a precoding evaluated based on the channel estimate, coded according to the available codebook 1740 and the index of the respective codebook is provided to the transmitter.
Fig. 17 therefore shows a MIMO-system with a codebook based precoding scheme. MIMO-precoding schemes can transmit multiple data streams via multiple beams 1760 and can thus increase the system capacity.

Feeding back complete channel information from the receiver makes it possible to conduct perfect precoding at a transmitter, however this requires high amounts of feedback information, i.e. signaling channels from the receiver to the transmitter, which utilize high data rates for detailed feedback information. Therefore, the reduction of the amount of the feedback is a major challenge in the field of MIMO-systems with codebook based precoding. Codebook based linear precoding requires only transmission of the preferable index of the predetermined codebook set as feedback information and requires therewith less feedback information.

Referring to Fig. 17, where the numbers of transmit and receive antennas are Nₜ and Nᵣ, and the number of simultaneously transmitted streams is Nₛ, the transmitted signal vector at time k can be written as ${X}_{k} = \left[\begin{matrix}{x}_{1} \\ ⋮ \\ {x}_{{N}_{t}}\end{matrix}\right] = \left[\begin{matrix}{f}_{11} & ⋯ & {f}_{1 ⁢ {N}_{s}} \\ ⋮ & ⋱ & ⋮ \\ {f}_{{N}_{t} , 1} & ⋯ & {f}_{{N}_{t} ⁢ {N}_{s}}\end{matrix}\right] ⁢ \left[\begin{matrix}{s}_{1} \\ ⋮ \\ {s}_{{N}_{s}}\end{matrix}\right] ≡ {F}_{k} ⁢ {s}_{k} ,$
where the precoding matrix **F**ₖ is computed from the elements of the codebook. In equation 1 the MIMO-channel **H**ₖ can be defined as ${H}_{k} ≡ \left[\begin{matrix}{h}_{11} & ⋯ & {h}_{1 ⁢ {N}_{t}} \\ ⋮ & ⋱ & ⋮ \\ {h}_{{N}_{r} ⁢ 1} & ⋯ & {h}_{{N}_{r} ⁢ {N}_{t}}\end{matrix}\right]$

Design concepts of codebooks are classified either as "one-shot codebook" or "tracking codebook". The main difference between the two codebook design concepts are described in the following Table 1.

**Table 1:**

| **Type** | **Description** |
|---|---|
| **One-shot** | A current precoding matrix is independent of the previousone. |
| **CB** | |
| **Tracking** | A current precoding matrix depends on the previous one. |
| **CB** | |

In case of one-shot codebooks each element of the codebook can be matrix or vector. The former is called matrix codebook and the latter is called vector codebook. In case of tracking codebooks conventional systems use vector codebooks with mostly recursive transmission algorithms as further detailed below.

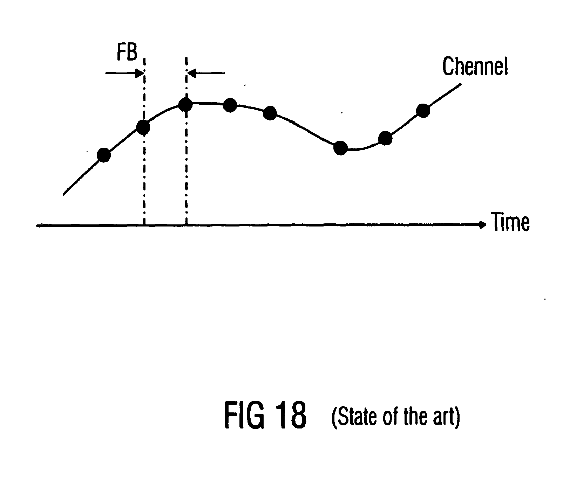

Fig. 18 shows a viewgraph of a channel coefficient of a mobile radio channel over a time axis. It is supposed that feedback is provided and channel samples taken in equidistant time periods, indicated in Fig. 18 by black dots. From the sampling points in Fig. 18 it can be seen that between two channel estimates and feedback periods the channel changes by a certain degree, which depends e.g. on the mobility within the communication scenario. In dependence on this change, the design concept of a codebook is chosen. If the channel changes are small, then the channel can be tracked, and a tracking codebook would be preferable. If the changes are rather high, then the one-shot codebook is preferable. In a practical wireless communication scenario, channels between two sample points can be correlated due to e.g. slow fading or a fast sampling frequency, which can be equivalent to a short feedback period. In this case a tracking codebook can offer a better trade-off between performance and required feedback bits, i.e. the required data rate on the feedback channel.

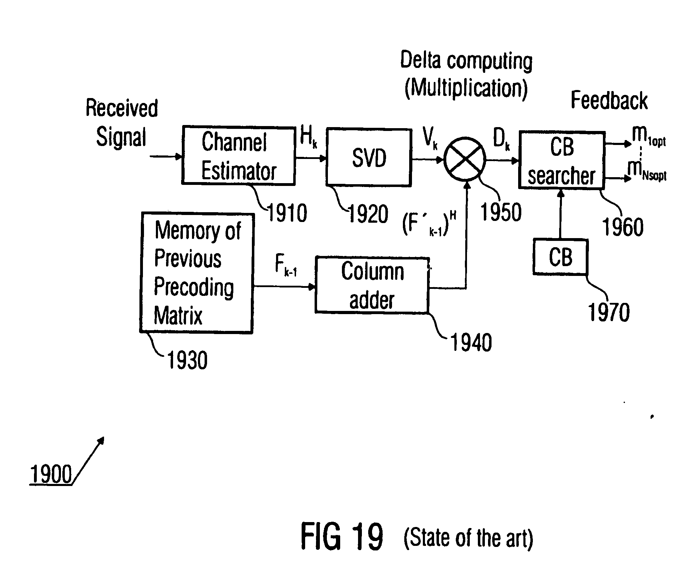

In the following an example system will be considered utilizing Nₜ=4 transmit antennas, Nᵣ=2 receive antennas, and Nₛ=2 data streams. Furthermore throughout this description k denotes a time index. Fig. 19 shows a conventional receiver structure 1900. The conventional receiver 1900 comprises a channel estimator 1910 to which a received signal is provided. The channel estimator 1910 estimates the radio channel on the basis of reference symbols and provides a channel estimate **H**ₖ to a processing unit 1920, which carries out a singular value decomposition, yielding a unitary matrix **V**ₖ, according to ${H}_{k} = {\left[\begin{matrix}{h}_{11} & {h}_{12} & {h}_{13} & {h}_{14} \\ {h}_{21} & {h}_{22} & {h}_{23} & {h}_{24}\end{matrix}\right]}^{Current channel} {⇒}_{{H}_{k} = {U}_{k} ⁢ {Λ}_{k} ⁢ {V}_{k}^{H}}^{SVD} {V}_{k} = \left[\begin{matrix}{v}_{11} & {v}_{12} \\ {v}_{21} & {v}_{22} \\ {v}_{31} & {v}_{32} \\ {v}_{41} & {v}_{42}\end{matrix}\right] .$

The receiver 1900 further comprises a memory 1930 where a previous precoding matrix **F**ₖ₋₁ is stored.

The receiver 1900 further comprises a column adder 1940 for adding a column to the previous precoding matrix **F**ₖ₋₁ yielding (**F**'ₖ₋₁)^{H}, according to ${F}_{k - 1} = \left[\begin{matrix}{f}_{11} & {f}_{12} \\ {f}_{21} & {f}_{22} \\ {f}_{31} & {f}_{32} \\ {f}_{41} & {f}_{42}\end{matrix}\right] ⁢ {⇒}^{Colum adding} ⁢ { F}_{k - 1}^{ʹ} [ \begin{matrix}{f}_{11} & {f}_{12} \\ {f}_{21} & {f}_{22} \\ {f}_{31} & {f}_{32} \\ {f}_{41} & {f}_{42}\end{matrix} {{\begin{matrix}\begin{matrix}{f}_{13} & {f}_{14} \\ {f}_{23} & {f}_{24} \\ {f}_{33} & {f}_{34} \\ {f}_{43} & {f}_{44}\end{matrix}\end{matrix} ]}_{↑}}_{Dummy}$

Equation 4 shows, that the column adder 1940 adds dummy columns to the previous precoding matrix **F**ₖ₋₁. In order to compute a delta matrix the outcome of the column adder 1940 and the processing unit 1920 are multiplied in a multiplier 1950, which delivers a delta matrix **D**ₖ, which in turn is input into a codebook searcher 1960, according to ${D}_{k} = {F}_{k - 1}^{ʹH} ⁢ {V}_{k} ⇒ {D}_{k} = \left[\begin{matrix}{d}_{11} & {d}_{12} \\ {d}_{21} & {d}_{22} \\ {d}_{31} & {d}_{23} \\ {d}_{41} & {d}_{24}\end{matrix}\right]$

The codebook searcher 1960 uses a codebook 1970 to encode the delta matrix **Dₖ** and delivers indices ***m***_{**1**ₒₚₜ}*...m**_{Nₛₒₚₜ}*** as indices for the vector codebook 1970, according to ${D }_{k} ⁢ {{[ \begin{matrix}\begin{matrix}{d}_{11} \\ {d}_{21} \\ {d}_{31} \\ {d}_{41}\end{matrix}\end{matrix}}_{↓}}_{{C}_{{m}_{1 ⁢ opt}} \to Feedback} \begin{matrix}{d}_{12} \\ {d}_{22} \\ {d}_{23} \\ {d}_{24}\end{matrix} ] {⇒}^{{D }_{2} = { Q}_{1} ⁢ {D}_{1}} [ \begin{matrix}{e}^{jθ} \\ ε \\ ε \\ ε\end{matrix} {{{\begin{matrix}\begin{matrix}{d }_{22}^{ʹ} \\ {d }_{23}^{ʹ} \\ {d }_{24}^{ʹ}\end{matrix}\end{matrix}}^{ε} ]}_{↓}}_{{C}_{{m}_{2 ⁢ opt}} \to Feedback} ⁢ { Q}_{1} = I - \frac{2}{{‖ {w}_{1} ‖}^{2}} ⁢ {w}_{1} ⁢ {w}_{1}^{H} ⁢ { with w}_{1} = {c}_{{m}_{1 ⁢ opt}} - {\left[10⋯0\right]}^{T} .$

As can be seen from equation 6 the delta matrix **D**ₖ is coded column wise. So the first column is taken and an appropriate matching vector is searched in the codebook 1970, upon which the matrix can be reduced by one dimension utilizing a householder function **Q**ₙ as given in equation 6. With the reduced matrix the next column comprises one dimension less than the first column, thus requiring less feedback. More details on the receiver structure and the mathematical background can be found in R1-060868, Intel, "Performance and complexity of scaleable Precoded MIMO (LLS & SLS),"3GPP RAN1 LTE, Mar 2006.

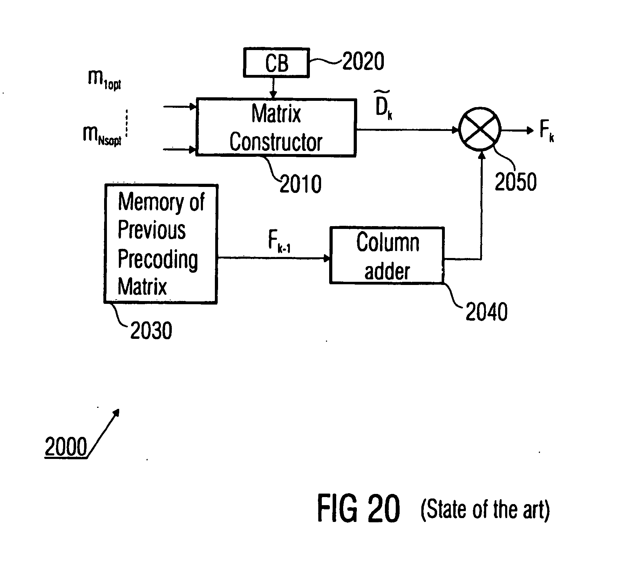

Fig. 20 displays a block diagram of a respective transmitter 2000. The transmitter 2000 comprises a matrix constructor 2010, which receives the codebook indices ***m*₁*ₒₚₜ ...m_{Nₛₒₚₜ}***. The matrix constructor 2010 is coupled to codebook 2020 which is the same codebook as used on the receiver side. Using a recursive algorithm, the matrix constructor constructs an estimate **D̃*ₖ*** for the respective delta matrix **D**ₖ from the codebook indices, according to $\left[\begin{matrix}1 \\ 0 \\ 0 \\ 0\end{matrix}{\begin{matrix}\begin{matrix} \\ {C}_{{m}_{2 ⁢ opt}} \\ \end{matrix}\end{matrix}}^{0}\right] {⇒}^{{Q}_{1} \times } \left[\begin{matrix}{d}_{11}^{ʹ} & {d}_{12}^{ʹ} \\ {d}_{21}^{ʹ} & {d}_{22}^{ʹ} \\ {d}_{31}^{ʹ} & {d}_{32}^{ʹ} \\ {d}_{41}^{ʹ} & {d}_{42}^{ʹ}\end{matrix}\right] ≡ {{D}^{}}_{k} .$

The transmitter 2000 further comprises a memory 2030 with the stored previous precoding matrix **F**ₖ₋₁ to which a column adder 2040 adds dummy columns according to

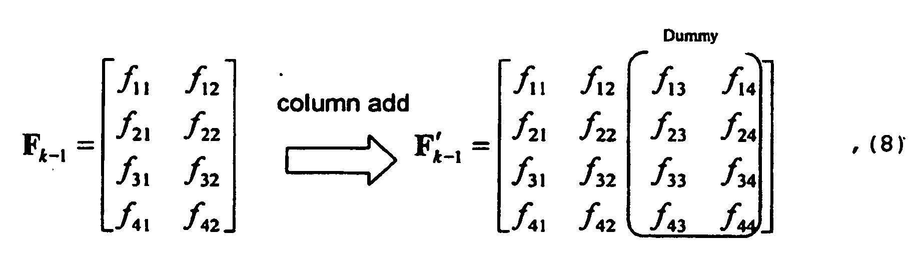

A multiplier 2050 then multiplies the column added previous precoding matrix and the estimated delta matrix to obtain a new precoding matrix, which can then be applied to the data streams s in order to obtain the transmit signals x, according to ${F}_{k} = \left[\begin{matrix}{f}_{11}^{ʹ} & {f}_{12}^{ʹ} \\ {f}_{21}^{ʹ} & {f}_{22}^{ʹ} \\ {f}_{31}^{ʹ} & {f}_{32}^{ʹ} \\ {f}_{41}^{ʹ} & {f}_{42}^{ʹ}\end{matrix}\right] = { F}_{k - 1}^{ʹ} ⇒ x = {F}_{k} ⁢ s .$

Alternatively, the above equation can also be amended as follows: $x = {F}_{k} ⁢ Ps$

In this equation, P is the Ns x Ns power allocation matrix.

The conventional transmitter 2000 and the conventional receiver 1900 use the same codebooks 2020 respectively 1970, which is comprised of vectors of a different length, performing the recursive delta matrix coding algorithm. Equation 10 describes a codebook **CB** in more detail, $\begin{matrix}CB : \left\{{C}_{1}^{ }⋯{C}_{B}^{ }\right\} \\ {C}_{m} \left(m=1,…,B\right) : {N}_{t} x 1 ⁢ vector \left(for {m}_{1}\right) ⁢ \left({N}_{t}-1\right) x 1 ⁢ vector \left(for {m}_{2}\right)\end{matrix}$

More details on the transmitter structure and the mathematical background can be found in R1-060868, Intel, "Performance and complexity of scaleable precoded MIMO (LLS & SLS)", 3GPP RAN1 LTE, Mar 2006.

The Figs. 19 and 20 show a receiver 1900 and a transmitter 2000 of a conventional precoding scheme with tracking capability where the current precoding matrix is updated using the previous one. The conventional scheme has the disadvantage that a column adder is required in order to adjust the size of the matrices. This is due to the fact that a precoding matrix is updated by multiplying the previous precoding matrix from the left hand side according to ${F}_{k} = {F}_{k - 1}^{ʹ} ⁢ {{D}^{˜}}_{k} .$

The number of added columns or dummy columns depends on the number of transmitted data streams. Moreover, the conventional scheme has the disadvantage that a matrix constructor 2010 is required on the transmitter side in order to form **D̃***ₖ* from the feedback indices. This is owing to the fact that in the conventional scheme multiple indices are fed back due to the use of a vector codebook, where the multiple indices also provide a disadvantage that more feedback bits or a higher feedback data rate is required. Furthermore, the conventional scheme provides the disadvantage that a processing unit 1920 is required in order to carry out a singular value decomposition. The singular value decomposition is a complex mathematical operation, which requires extra processing power on the receiver side. Overall the conventional system has the disadvantage that a high hardware and software complexity is required in order to implement the precoding scheme.

US 6754473 B1 discloses an apparatus and method for providing closed loop transmit antenna diversity in a mobile communication system. In order to maximize the sum of the vectors of signals received from at least two antennas at a base station, a mobile terminal calculates the vectors of the signals received from the antennas of the base station, calculates differential vectors for the input signal vectors in order to maximize the sum of the input signal vectors and transmits information about the calculated differential vectors to the base station, which uses them to maximize the sum of the vectors of signals subsequently received by the mobile terminal. The closed loop transmit antenna diversity scheme as disclosed enables a signal-to-noise ratio to be maximized at a mobile terminal utilizing at least one receive antenna, by adjusting the transmit signals from at least two transmit antennas at the base station in order to superimpose the signals at the receive antenna of the mobile terminal coherently. By the coherent superimposition of the signals experiencing independent realizations of the mobile radio channel, diversity gain and gain in signal-to-noise ratio is obtained.

It is the object of the present invention to provide a receiver apparatus, a transmitter apparatus enabling more efficient concept for precoding operation in a MIMO-system, achieving a higher link and system capacity with less feedback information and reduced complexity.

The object is achieved with a receiver apparatus according to claim 1, a transmitter apparatus according to claim 16, a method for controlling a precoding operation according to claim 14, a method for transmitting according to claim 28, and a transmitted precoding feedback signal according to claim 30.

The present invention is based on the finding that valuable transmission resources can be saved in a transmission scheme with precoding, when the updating of a precoding matrix is based on a codebook search, which can be implemented with a lower complexity than the conventional precoding concept. The new receiver structure can be realized with smaller hardware size in a less complex manner. The present invention further provides the advantage that higher system and link capacity can be achieved with a lower amount of feedback, saving valuable transmission resources on the feedback channel in the other direction of transmission. Since the inventive approach allows multiplying a previous precoding matrix from the right hand side with an update matrix, the need for a column adder for matrix size adjustment both on transmitter and on receiver side is eliminated compared the conventional scheme. Furthermore, the processing unit processing the singular value decomposition on the receiver side is not needed in embodiments. Therewith the inventive approach provides a much simpler solution. With the inventive approach being simpler than the conventional scheme it can be implemented with lower hardware or software complexity, which enables a much more economical implementation of a MIMO transmission scheme providing the above-mentioned benefits.

Embodiments of the present invention will be detailed using the figures attached, in which
- Fig. 1: shows an embodiment of a receiver apparatus;
- Fig. 2: shows another embodiment of a receiver apparatus;
- Fig. 3: shows an embodiment of a transmitter apparatus;
- Fig. 4: shows another embodiment of a transmitter apparatus;
- Fig. 5: shows an embodiment of a MIMO transmission system;
- Fig. 6: shows an embodiment of a codebook generator apparatus;
- Fig. 7: shows an embodiment of a method for generating a plurality of update matrices;
- Fig. 8a: shows a pseudo code of an embodiment of a method for generating a plurality of update matrices;
- Fig. 8b: shows a viewgraph illustrating achievable capacity improvements with a respective embodiment.
- Fig. 9: shows another embodiment of a receiver apparatus;
- Fig. 10: shows another embodiment of a receiver apparatus;
- Fig. 11: shows another embodiment of a transmitter apparatus;
- Fig. 12: shows another embodiment of a transmitter apparatus;
- Fig. 13: shows an embodiment of a method for updating precoding information with absolute and differential precoding update information;
- Fig. 14: shows an embodiment of a method for providing precoding information;
- Fig. 15: shows a viewgraph illustrating achievable capacity improvements with a respective embodiment;
- Fig. 16a: shows simulation results illustrating the capacity improvements of respective embodiments;
- Fig. 16b: shows simulation results illustrating the capacity improvements over an average signal-to-noise-ratio achievable with respective embodiments.

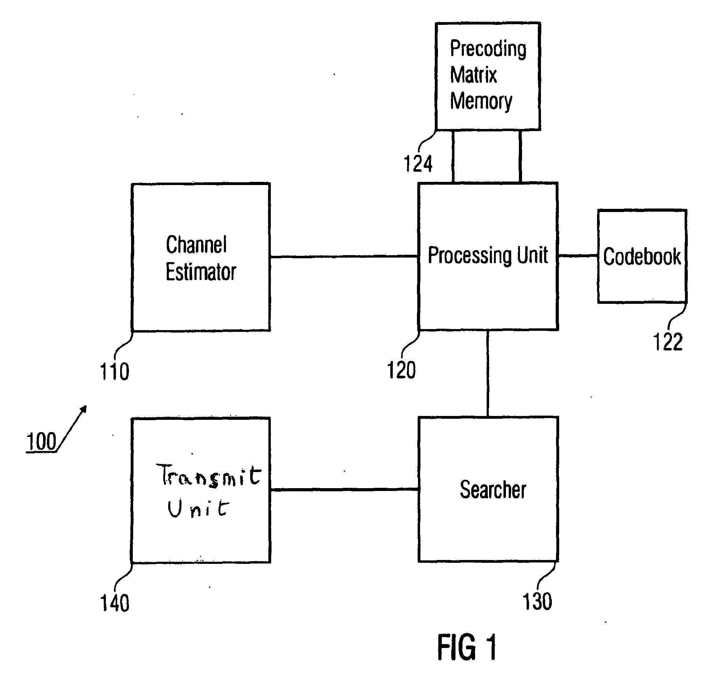

Fig. 1 shows an embodiment of a receiver apparatus 100. The receiver apparatus 100 is comprised of channel estimator 110, which is coupled with a processing unit 120. The processing unit 120 is coupled with a codebook 122, a precoding matrix memory 124 and a. searcher 130. The searcher 130 is coupled with a transmit unit 140. The receiver apparatus 100 is adapted for controlling a precoding operation in a transmitter within a transmission scheme having a first number of transmit antennas and a second number of receive antennas, the first number being larger than one and the second number being larger or equal to one. The receiver apparatus 100 comprises the channel estimator 110 for estimating a radio channel between the transmitter and the receiver apparatus 100 based on a received signal to determine a radio channel estimate.

The receiver apparatus 100 further comprises the processing unit 120 providing possible new matrices based on update matrices stored in an update matrices codebook 122 and an old precoding matrix stored in the precoding matrix memory 124, an update matrix may have at least two rows and at least two columns. The receiver apparatus 100 further comprises the searcher 130 for searching a new precoding matrix fulfilling an optimization criteria based on the radio channel estimate among the possible new precoding matrices and a transmit unit 140 for transmitting an update matrix index, which is associated with the new precoding matrix found when searching the new precoding matrices.

In one embodiment the second number of receive antennas is larger than one and a precoding matrix having at least two rows and at least two columns. The processing unit may be adapted for providing a new possible precoding matrices by multiplication, the multiplication having an update matrix and the old processing matrix as multiplication partners. Moreover, the receiver apparatus 100 can be adapted for receiving multi-carrier signals and being operative for controlling a precoding operation in each of or a group of carriers in the multi-carrier signals.

In one embodiment the processing unit 120 is implemented as a multiplier and multiplies the old precoding matrix from the precoding matrix memory 124 with the update matrices from the codebook 122. Once a new precoding matrix is found, the processing unit can update the precoding matrix for the next update iteration.

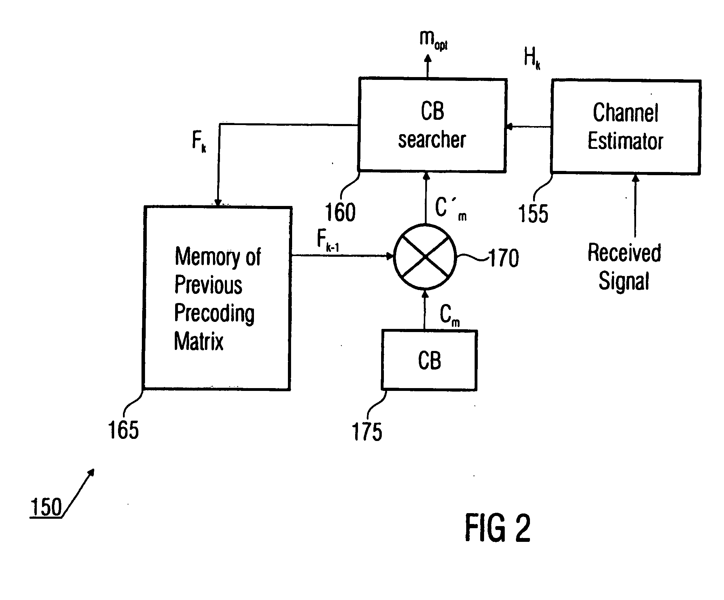

Fig. 2 shows another embodiment of a receiver apparatus 150. The receiver apparatus 150 comprises a channel estimator 155, which evaluates a channel estimate **H**ₖ from the received signal and provides the channel estimate **Hₖ** to a codebook searcher 160. The receiver further comprises a memory 165 for previous precoding matrices **F**ₖ₋₁, which are multiplied by a multiplier 170 with update matrices Cₘ from a codebook 175, yielding a set of new precoding matrixes C'ₘ, which is also provided to the codebook searcher 160. The updated precoding matrices are given by $\left\{{C}_{1}^{ʹ}…{C}_{l}^{ʹ}\right\} = \left\{{C}_{p}⁢{F}_{k - 1}…{C}_{q}⁢{F}_{k - 1}\right\} ,$
where the previous precoding matrix Fₖ₋₁ is multiplied on the right hand side in order to determine a set of possible new precoding matrices to be searched. Generally 1 is an integer smaller than or equal to B, p is a lower multiplication index greater than or equal to one and q is a higher multiplication index smaller than or equal to B. Thus, one can also calculate a subset of the indices from 1 to B e.g. 1,2,4,B. In this case p would be 1 and q would be B and there would only be two numbers in between, such as 2,4.

In yet another embodiment another matrix may be multiplied, i.e. C'ₖ= CₖAₖFₖ₋₁, in order to carry out any other precoding or adaptation task. The codebook searcher 160 carries out a search throughout all updated precoding matrices **C'ₘ** in order to find an optimized precoding matrix **C'*_{mₒₚₜ}***, which for example in one embodiment maximizes the channel capacity for the given channel estimate **H**ₖ, which can be denoted as ${m}_{opt} = arg {max}_{m} Capacity \left(H⁢{σ}^{2}\left\{{C}_{m}^{ʹ}\right\}\right) ,$
wherein σ² denotes the noise variance or noise power. Note that in other embodiments the optimization criterion may be different, for example maximizing a signal-to-noise-ratio or other metrics relating to a quality of a communication link. The codebook searcher 160 determines the optimum precoding matrix **C'*_{mₒₚₜ}***, which can then be provided to the memory 165 of previous precoding matrices as Fₖ for the next iteration of the precoding update. Furthermore, the codebook searcher 160 provides the index of the found optimized update matrix **C'*_{mₒₚₜ}***, i.e. mₒₚₜ to the transmitter.

In another embodiment the codebook searcher 160 determines a maximum capacity on the basis of a minimum-mean-square-error-successive-interference-cancellation detection (MMSE-SIC = minimum-mean-square-error-successive-interference-cancellation). In another embodiment the processing unit 120 (Fig. 1) comprises a storage means for storing the codebook, according to the codebook 175.

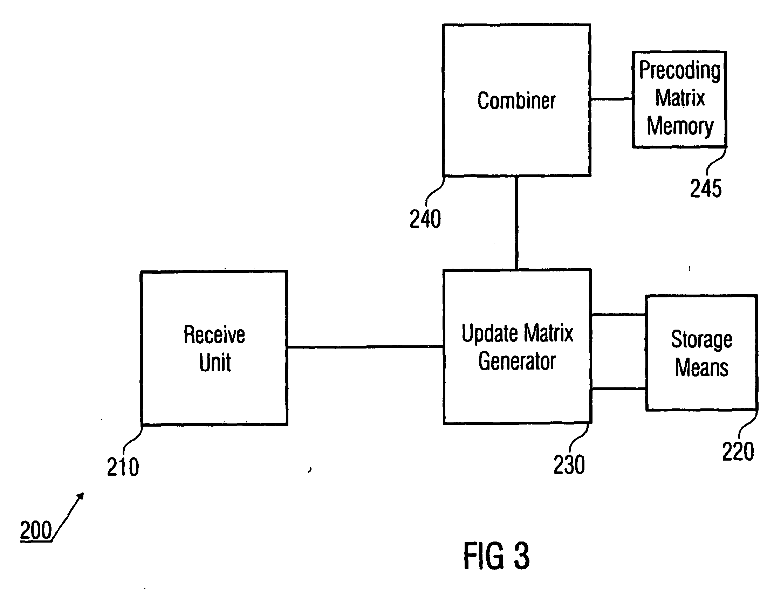

Fig. 3 shows an embodiment of a transmitter apparatus 200. The transmitter apparatus 200 comprises a receive unit 210, a storage means 220, an update matrix generator 230, a combiner 240, and a precoding matrix memory 245.

The transmitter apparatus 200 is adapted for transmitting a precoded signal, the signal being precoded using a an updated precoding matrix stored in the precoding matrix memory 245 within transmission scheme having a first number of transmit antennas and a second number of receive antennas, the first number being larger than one and the second number being larger or equal to one. The transmitter apparatus 200 comprises the receive unit 210 for receiving a received update index and the storage means 220 for storing a codebook having different update information items, each update information item having associated therewith an update index. The transmitter apparatus 200 further comprises the update matrix generator 230 for generating an update matrix having at least two rows and at least two columns using the received update index and the associated update information item from the codebook comprised within the storage means 220 and the combiner 240 for combining an earlier used precoding matrix 245 and the update matrix provided by the retriever 230 to obtain the updated precoding matrix.

In one embodiment the receive unit 210 can be adapted for receiving a received update matrix index (mₒₚₜ) and the storage means 220 being adapted for storing a codebook having different update matrices (**C**ₘ), each update matrix (Cₘ) having associated therewith an update matrix index (m), an update matrix (**C**ₘ) having at least two rows and at least two columns.

In another embodiment the combiner 240 is adapted for obtaining the updated precoding matrix (**F**ₖ) by multiplication, the multiplication having the earlier used precoding matrix (**F**ₖ₋₁) and the update matrix (**C**mₒₚₜ) as multiplication partners and the earlier used precoding matrix (Fₖ₋₁) being multiplied on the right hand side. The second number of receive antennas may be larger than one, and a precoding matrix (Fₖ₋₁, Fₖ) can be a square matrix. Moreover, an update matrix (**C**ₘ) may be square matrix. The transmitter apparatus 200 may be adapted for transmitting multi-carrier signals and being operative for controlling a precoding operation in each of or a group of carriers in the multi-carrier signals.

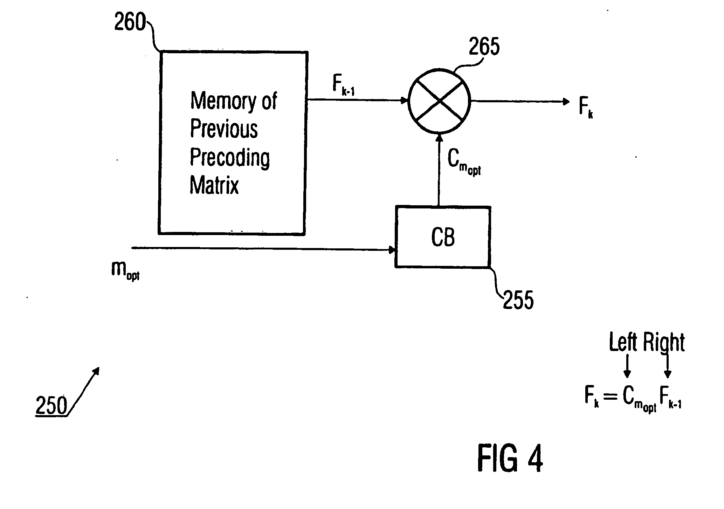

Fig. 4 shows another embodiment of a transmitter apparatus 250. The transmitter apparatus 250 comprises a codebook 255, which is provided with the optimum update matrix index mₒₚₜ, which is received from a receiver. With the received update matrix index, the codebook can provide the associated update matrix **C'*_{mₒₚₜ}***. The transmitter apparatus 250 further comprises a memory 260 for storing the previous precoding matrix **F**ₖ₋₁. Furthermore, the receiver apparatus 250 comprises a multiplier 265, which multiplies the update matrix with the previous precoding matrix according to ${F}_{k} = {C}_{{m}_{opt}} ⁢ {F}_{k - 1} .$

The multiplier 260 can then provide the updated precoding matrix **F**ₖ. According to the embodiment shown in Fig. 4, the combiner 240 can be implemented as a multiplier 265. In another embodiment, the transmitter apparatus 200 respectively 250 comprises a precoder for applying the precoding matrix **F**ₖ to a transmit signal.

Furthermore the precoding matrix **F**ₖ can be initialized in another embodiment, initialization may help to reduce a tracking error in some situations. The initialization can be done on a periodical basis or it can be triggered by a control signal or feedback from a receiver. The initialization matrix can be one element of the codebook and in an embodiment it can be composed of unit vectors as taken from an identity matrix, e.g. for Nₜ=4 transmit antennas and Nₛ=2 data streams $\left[\begin{matrix}1 & 0 & 0 & 0 \\ 0 & 1 & 0 & 0 \\ 0 & 0 & 1 & 0 \\ 0 & 0 & 0 & 1\end{matrix}\right] ⇒ { F}_{0} = \left[\begin{matrix}1 & 0 \\ 0 & 1 \\ 0 & 0 \\ 0 & 0\end{matrix}\right]$

Note an essential difference to the conventional scheme is that the precoding matrix is updated by multiplying the previous precoding matrix to **C'*_{mₒₚₜ}*** from the right hand side. This eliminates the need for a column adder for a matrix size adjustment and the need for a singular value decomposition. Furthermore, the use of a matrix codebook instead of a vector codebook as in a conventional scheme eliminates the need for a matrix constructor, and in addition reduces the required feedback information.

Therefore, embodiments provide the advantage that they reduce the hardware and software complexity in a transmitter and in a receiver. Furthermore, the required feedback information is less than in the conventional scheme, therefore requiring less feedback bits , data rate, and transmission resources in the feedback channel.

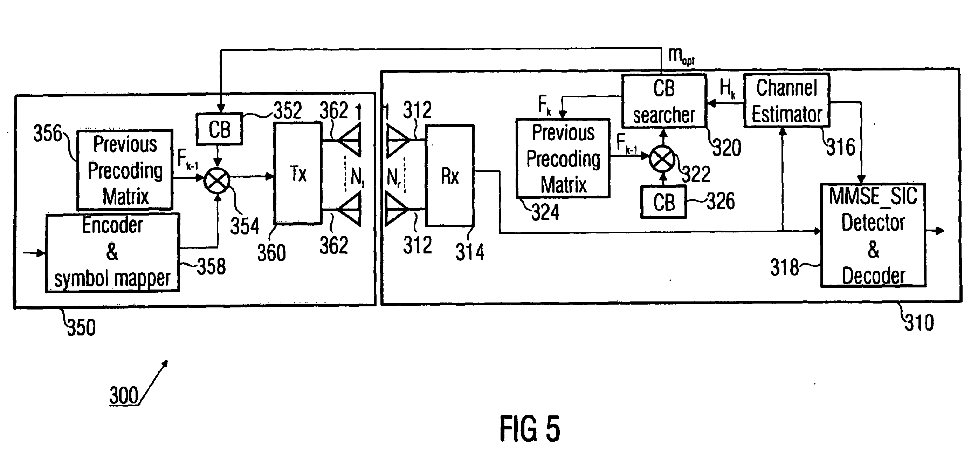

Fig. 5 shows a MIMO transmission system 300, comprising an embodiment of a receiver apparatus 310. The receiver apparatus 310 comprises a number Nᵣ of receive antennas 312 being coupled to a receive unit 314. The receive unit 314 provides a received signal to a channel estimator 316 and to an MMSE-SIC detector and decoder 318. The channel estimator 316 then provides a channel estimate to the MMSE-SIC detector and decoder 318 and to a codebook searcher 320, which is coupled to a multiplier 322 from which it is provided with the result of the multiplication of a previous precoding matrix **F**ₖ₋₁ stored in a storage means 324 and update matrices from a codebook 326, similar to what was described above. Once having found the optimum update matrix, the codebook searcher 320 provides the optimum update matrix index mₒₚₜ to a transmitter apparatus 350.

The transmitter apparatus 350 comprises a codebook 352, which receives the optimum update matrix index mₒₚₜ from the receiver apparatus 310. The codebook 352 can then provide the optimum update matrix to a multiplier 354. The multiplier 354 further receives the previous precoding matrix **F**ₖ₋₁ from a previous precoding matrix storage 356. An encoder and symbol mapper 358 provides a transmit signal to the multiplier 354, which multiplies the transmit signal with the updated precoding matrix and provides the result to a transmit unit 360. The transmit unit 360 utilizes a number Nᵣ of transmit antennas 362 to transmit the signal through the radio channel to the receiver apparatus 310.

In the embodiment shown in Fig. 5, the codebook searcher 320 can evaluate the optimum update matrix, e.g. by optimizing a link or system capacity, which can be calculated assuming MMSE-SIC detection, and therefore in one embodiment the codebook searcher 320 and the MMSE-SIC detector and decoder 318 can partially share circuits, which leads to a further reduction of the hardware and software complexity. Furthermore, in another embodiment, each of the codebook matrices is a unitary matrix, which will be further detailed below. In embodiments of codebook based precoding systems, the transmitter and the receiver should share the same codebook. The codebook can be generated offline and stored in a storage medium or memory in a transmitter as well as in a receiver. Generally, the generation of a codebook relates to the system performance, therefore is the generation of a codebook critical. According to the embodiments described above, each element of the considered codebooks **C**ₖ is an Nₜ x Nₜ matrix. Additionally, as described above, a tracking precoding scheme is assumed, so the codebook should be generated to have tracking capability.

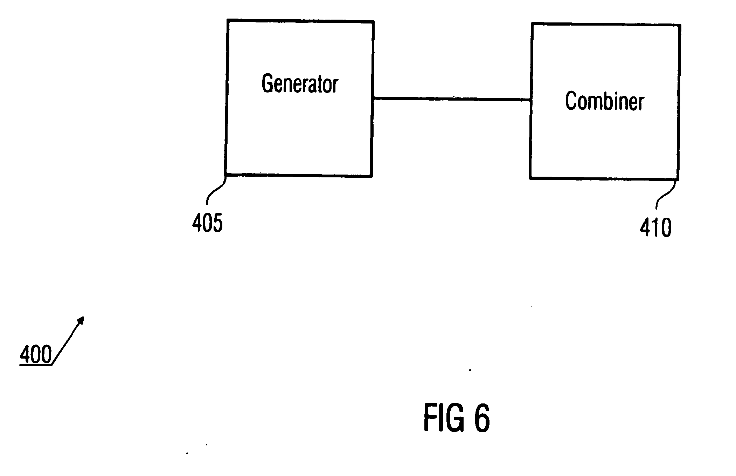

Fig. 6 shows an embodiment of a codebook generator apparatus 400, which comprises a generator 405 and a combiner 410. The embodiment of the codebook generator apparatus 400 is adapted for generating a codebook comprising one or more update matrices to be used in a precoding scheme with a transmission scheme having a first number of transmit antennas and a second number of receive antennas, the first number being larger than one and the second number being larger or equal to one, calculating each update matrix, comprising a generator (405) for generating a first matrix and for generating a second matrix being correlated with the first matrix by a correlation degree and comprising a combiner (410) for combining the first matrix and the second matrix to obtain one update matrix.

The codebook generator apparatus 400 can generate a codebook having at least two update matrices to be used in a precoding operation, each update matrix being associated with an update matrix index the update matrices being calculated by generating a first matrix and by generating a second matrix being correlated with the first matrix by a correlation degree and by combining the first matrix and the second matrix to obtain one update matrix, where for calculating different update matrices, a different correlation degree or a different first matrix and the same correlation degree is used.

In one embodiment the generator 405 is adapted for generating matrices with column vectors having a magnitude between 0.5 and 1.5 and with angles between any two column vectors being between 45° and 145°. In another embodiment the generator 405 is adapted for generating unitary matrices, matrices which have orthogonal columns, or matrices which are close to orthogonal, which can for example be based on random or pseudo-random matrices. In another embodiment each of the update matrices has an associated unique update matrix index. In yet another embodiment the combined update matrix has elements on its diagonal, whose magnitudes are at least twice as high as a magnitude of any off-diagonal element. The correlation degree between the first and the second matrix can for example be realized by a generator having a coherence time, i.e. the correlation degree corresponding to a time shift between two generated matrices. The correlation degree can further be associated with the fading property of a radio channel. In an embodiment of a larger codebook matrices with a number of different correlation degrees are considered for generating the update matrices. For example the first and second matrices can be generated using a Jakes model.

In another embodiment of codebook generator apparatus 400, the generator 405 can be adapted for generating the first and second matrices by generating random matrices to which a singular value decomposition is applied or any matrix triangularization method, in order to obtain unitary matrices. The unitary matrices may then be multiplied to each other in order to create an update matrix also being unitary, which has tracking capability. In yet another embodiment the codebook as described above may be stored on a storage medium. When using matrix codebooks, it is preferable that each element matrix of the codebook is a unitary matrix, which has orthogonal columns leading to a better performance and lower complexity.

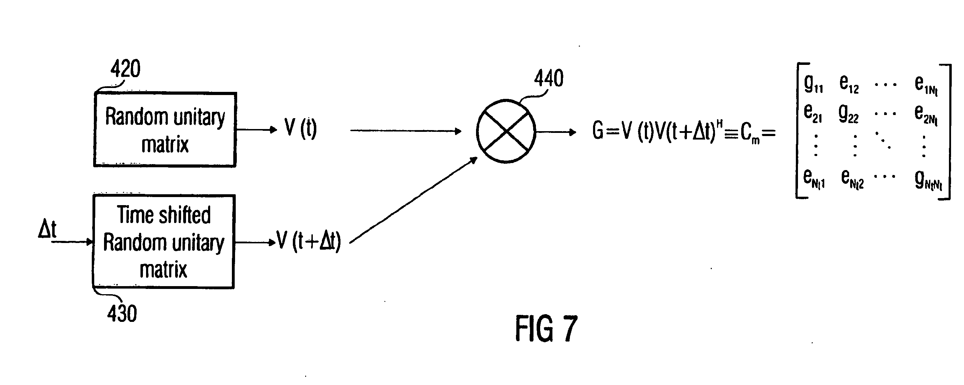

Fig. 7 shows an embodiment of a codebook generation method. A first unitary matrix **V**(t) is generated by a random unitary matrix generator based on a given time shift Δt. The two matrices are then multiplied in a step 440 of which the outcome is a matrix G, according to $G = V \left(t\right) ⁢ V ⁢ {\left(t+Δ⁢t\right)}^{H} ≡ {C}_{m} = \left[\begin{matrix}{g}_{11} & {ϵ}_{12} & ⋯ & {ϵ}_{1 ⁢ {N}_{t}} \\ {ϵ}_{21} & {g}_{22} & ⋯ & {ϵ}_{2 ⁢ {N}_{t}} \\ ⋮ & ⋮ & ⋱ & ⋮ \\ {ϵ}_{{N}_{t} ⁢ 1} & {ϵ}_{{N}_{t} ⁢ 2} & ⋯ & {g}_{{N}_{t} ⁢ {N}_{t}}\end{matrix}\right] ,$

yielding one update matrix Cₘ as given in equation 16. According to the embodiment in Fig. 7, each element of the codebook is generated by multiplying two random unitary matrices. Therefore, the resulting matrix is also unitary. Additionally, the two unitary matrices are time shifted versions from each other, i.e. for as long as the generator has a coherence time, they are correlated accordingly, so the resulting codebook element has a tracking capability. More specifically, also referring to equation 16, when a channel variation between two sample periods, i.e. between two feedback periods, is small, the off-diagonal elements εᵢⱼ of **C**ₘ are small compared to the diagonal elements gᵢᵢ. Such a matrix is for finer precoding matrix adjustment. If the channel variation between two sampled periods is large, for example due to fast fading in the radio channel, the off-diagonal elements εᵢⱼ should be as large as the diagonal elements gᵢᵢ to enable a more dynamic precoding matrix adjustment. Therefore, when the codebook is designed in such a way that each element matrix is generated from various Δt, update matrices can be generated for various channel environments. Therefore, embodiments provide the advantage that the codebook can be adapted to various environments based on the time shift Δt, respectively based on the correlation degree.

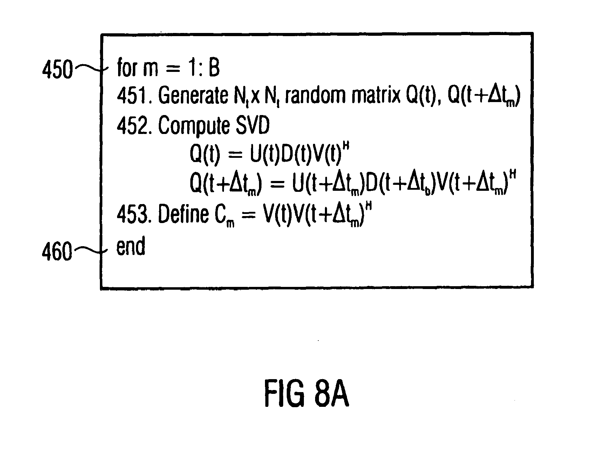

Fig. 8a shows a pseudo code of an embodiment of a method for generating an according codebook. In the pseudo code, depicted in Fig. 8a B is the codebook size and accordingly a loop runs over B iterations indicated by the "for"-loop in steps 450 and 460. In a step 451 two matrices of size Nₜ x Nₜ are generated, which are time shifted by Δt. In a step 452 singular value decompositions of both matrices are calculated, and in a step 453 two obtained unitary matrices from step 452 are multiplied in order to obtain one update matrix **C**ₘ. The loop then runs over B iterations. The random matrices generated in step 451 may be generated based on a Jakes model, which is also widely used to generate fading coefficients. The singular value decomposition is used to obtain unitary matrices. In step 453, each element of the codebook is computed. Furthermore, the process of Fig. 8a can be repeated for a sufficient number of times in order to obtain an optimum set of codebooks or update matrices in terms of achievable channel capacities depending on the environment.

In another embodiment a subset of the matrix G could be defined as $G = V \left(t\right) ⁢ V ⁢ {\left(t+Δ⁢t\right)}^{H} ≡ \left[\begin{matrix}\begin{matrix}{g}_{11} \\ {ε}_{21} \\ ⋮ \\ {ε}_{{N}_{t} ⁢ 1}\end{matrix}\end{matrix}\begin{matrix}{ε}_{12} & ⋯ & {ε}_{{1 ⁢ N}_{t}} \\ {g}_{22} & ⋯ & {ε}_{{2 ⁢ N}_{t}} \\ ⋮ & ⋱ & ⋮ \\ {ε}_{{N}_{t} ⁢ 2} & ⋯ & {g}_{{N}_{t} ⁢ {N}_{t}}\end{matrix}\right] ⇒ {{C}_{̲}}_{m} = \left[\begin{matrix}\begin{matrix} \\ \\ \\ \end{matrix}\end{matrix}\right] ,$ i.e. a subset e.g. a row or column vector of **V**(*t*) **V** (*t*+Δt)*^{H}* is used to generate an update matrix for the codebook. In one embodiment the combiner (410) is adapted for using only a subset of a combination of the first and the second matrices for generating an update matrix and in yet another embodiment the subset corresponds to a row or column vector.

The codebook generator apparatus (400) may have the generator being adapted for generating the first and second matrices in order to optimize a channel capacity by several trials. The codebook generator apparatus (400) can further comprising a means for quantizing the update matrices. The update matrices may be square matrices in another embodiment. Alternatively, they can be symmetric or conjugate symmetric matrices as e.g. expressed by (A^T=A, A^H=A).

The matrices , which are generated as part of the pseudocode in Fig. 8a can have propagation channel properties. In one embodiment they may be generated as mutually random independent identically distributed variables, i.e. the correlation degree can also be zero. In another embodiment they can be generated as mutually correlated random variables, where the correlation value or degree can be adjusted. In yet another embodiment a range of different correlation values is covered. There may also exist an imbalance among the average power of each of the components, i.e.∥*q*₁₁∥² ≠∥q₂₂∥². If the codebook gets generated considering the characteristics of the actual propagation channel, such as correlation between antennas and average power imbalance among antennas or propagation paths, the link or system capacity can even further be increased. Furthermore the codebook may include update matrices, which are close or even identical to an identity matrix, which provides the option of not updating a precoding matrix in some situations, in which it might be more beneficial to not update the precoding matrix.

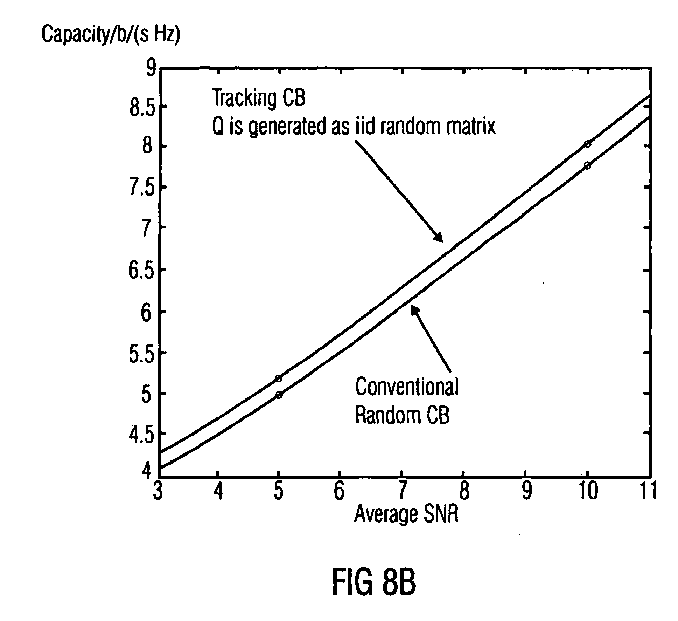

Fig. 8b shows a viewgraph of achievable capacity improvements with an embodiment. Fig. 8b shows two link capacity graphs versus an average signal-to-noise-ratio (SNR). The figure at the top is achieved with the embodiment, the figure at the bottom with the conventional scheme. An exemplified scenario with a number Nₜ=4 of transmit antennas, a number Nᵣ=2 receive antennas, and a number Nₛ=2 of data streams is considered. The embodiment provides a capacity improvement of about 0.3b/(s Hz).

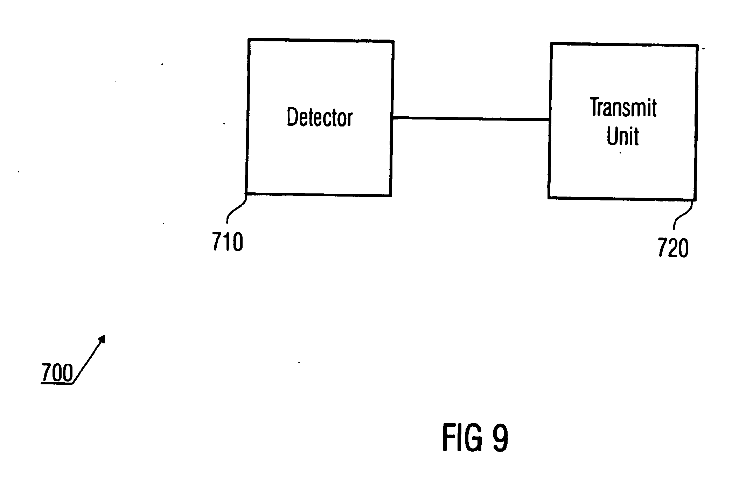

Codebook based precoding with tracking capability exploits the channel coherence between two sample points, i.e. the coherence of one feedback period, and thus offers higher capacity then one-shot codebook based precoding. However, if feedback errors occur or sudden changes in the propagation channel occurs, tracking of a reliable precoding matrix can sometimes be difficult. Therefore, instead of providing differential update information, as in the case of codebook based precoding with tracking capability, it can in some situations be beneficial to provide absolute precoding information, as in the case of one-shot codebook based precoding. Fig. 9 shows a receiver apparatus 700 comprising a detector 710 and a transmit unit 720. The receiver apparatus 700 is adapted for providing precoding information, comprising a detector 710 for detecting an event and a transmit unit 720 for transmitting absolute precoding information at a first time instant in response to a detected occurrence of the event and for transmitting differential precoding information at a second time instant different from the first time instant.

In an embodiment, the detector 710 is adapted for detecting as the event, a lapse of a predefined period since an earlier time instant, at which the absolute precoding information was sent or, as the event, a situation in which the absolute precoding information is more advantageous for a communication link than the differential precoding information.

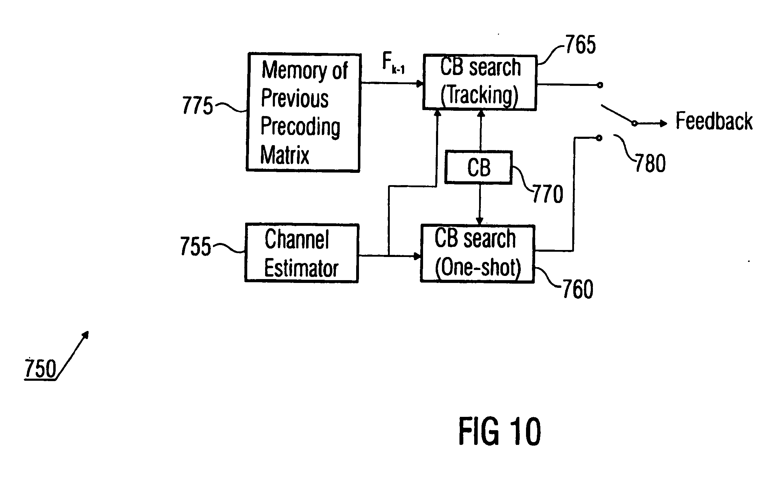

Fig. 10 shows another embodiment of a receiver apparatus 750. The receiver apparatus 750 comprises a channel estimator 755 for providing a channel estimate to a codebook searcher 760, which is adapted for searching a one-shot codebook, the channel estimator 755 further providing the channel estimate to another codebook searcher 765, which is adapted for searching in a tracking capable codebook. In the embodiment of the receiver apparatus 750 depicted in Fig. 10 the codebook searcher 765 and the codebook searcher 760 access the same codebook 770. In another embodiment they may have separated codebooks. The receiver apparatus 750 further comprises a memory unit 775, which provides the codebook searcher 765 with tracking capability with the previous precoding matrix in order to enable a codebook search as described above. Furthermore, the embodiment depicted in Fig. 10 comprises a switch 780, which indicates that the embodiment can either transmit precoding information based on a one-shot codebook, i.e. absolute precoding information, respectively can transmit tracking capable update information being based on a codebook with tracking capability, i.e. differential precoding information.

In another embodiment the receiver apparatus 700 respectively the detector 710 is adapted for detecting the situation in which the absolute precoding information is more advantageous based on a range of the absolute precoding information and the range of the differential precoding information. In this embodiment differential precoding information is provided for tracking small changes in the radio channel. However, the codebook is not able to track faster changes in the radio channel as for example evoked by excessive fast fading, high mobility or Doppler-scenarios. Whenever the change in the channel is too large, the detector 710 may decide on transmitting absolute precoding information. In another embodiment the transmit unit 720 is adapted for transmitting an indicator indicating whether currently transmitted precoding information is absolute or differential. This indicator can be implemented by a single bit to be transmitted within a feedback or control channel, indicating how the contained control information shall be interpreted.

In another embodiment the receiver apparatus may be adapted for receiving multi-carrier signals and be operative for providing precoding information operation of each of or a group of carriers in the multi-carrier signals. The receiver apparatus (700) can e.g. provide precoding information in terms of a matrix codebook index. In another embodiment the receiver apparatus (700) may provide differential precoding information on the basis of a matrix codebook, the matrix codebook having a special codebook index for absolute precoding information, the absolute precoding information being provided on the basis of a column vector of an absolute precoding matrix.

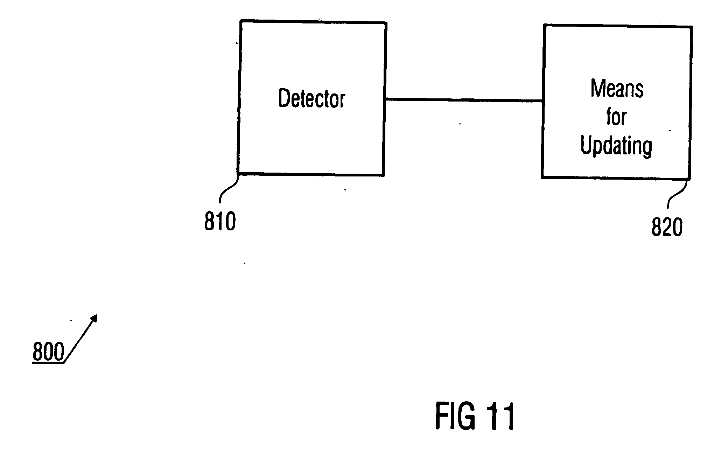

Fig. 11 shows an embodiment of a transmitter apparatus 800. The transmitter apparatus 800 is adapted for transmitting a signal using precoding, the precoding being updated on a precoding information, comprising a detector 810 for detecting an event and a means for updating 820 with absolute precoding information at a first time instant in response to a detected occurrence of the event and for updating with differential precoding information at a second time instant different from the first time instant. In one embodiment the detector 810 is adapted for detecting as the event, a lapse of a defined period since an earlier time instant at which the absolute precoding information was received or, as the event a situation in which the absolute precoding information is more advantageous for a communication link than the differential precoding information. In another embodiment the transmitter apparatus 800 further comprises a receiver for receiving the absolute precoding information or the differential precoding information. In another embodiment the receiver is adapted for providing an indicator whether the situation in which the absolute precoding information is more advantageous than the differential precoding information has occurred. In one embodiment, the transmitter apparatus may be able to judge the situation by estimating a radio channel itself.

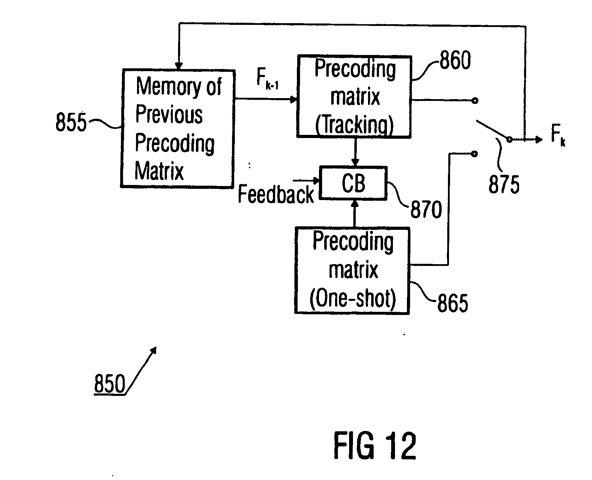

Fig. 12 shows another embodiment of a transmitter apparatus 850. The transmitter apparatus 850 comprises a memory 855 for storing a previous precoding matrix **F**ₖ₋₁, which is provided to a precoding matrix codebook searcher with tracking capability 860. The transmitter apparatus 850 further comprises a precoding matrix searcher 865 for one-shot-mode 865, which has a common codebook 870 with the precoding matrix codebook searcher 860 for tracking mode. The transmitter apparatus 850 further comprises a switch 875, which can switch between precoding based on tracking, i.e. based on differential precoding information or precoding based on one-shot updates, i.e. precoding based on absolute precoding information. In another embodiment of the transmitter apparatus 800 separate codebooks are available for absolute and differential precoding information.

The transmitter apparatus (800) may in one embodiment be adapted for transmitting multi-carrier signals and being operative for precoding each of or a group of carriers in the multi-carrier signals with differential or absolute precoding information. The transmitter apparatus (800) can precode on a basis of a matrix codebook index and the matrix codebook may have a special codebook index for absolute precoding information, the absolute precoding information being provided on the basis of a column vector of an absolute precoding matrix.

The embodiments described above provide a mechanism to switch between tracking and one-shot codebook mode to combat the situation where sudden channel changes or feedback errors occur. According to an embodiment, the precoding matrix generation at the transmitter apparatus and the codebook search are performed either in tracking or in one-shot codebook mode. In one embodiment, one codebook is shared between the two modes, and in yet another separate codebooks are used. The switching between the two modes can for example in one embodiment be done in a periodical manner according to a predetermined period known to the transmitter and the receiver. In another embodiment switching can be done based on the feedback from the receiver, e.g. by an indicator used within the feedback.

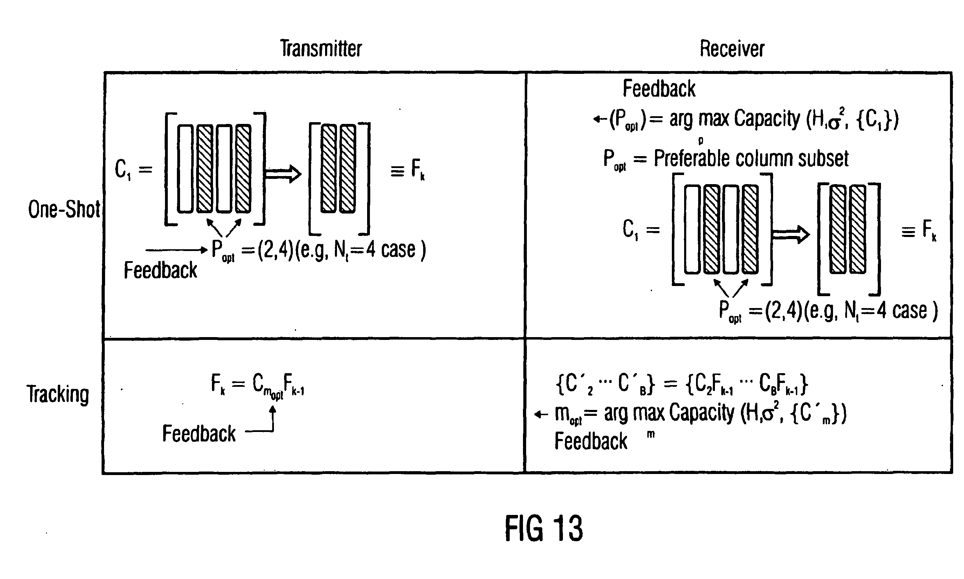

Fig. 13 shows a table with 4 cells, where the cells on the left hand side refer to the transmitter, the cells on the right hand side refer to the receiver, the cells at the top refer to one-shot mode, and the cells at the bottom refer to tracking mode. In one-shot mode, it is preferable to use a column vector index as a precoding vector, as is described in detail in R1-050903, Qualcomm, Europe, "Description and link simulations of MIMO schemes for OFDMA based E-UTRA downlink evaluation".

As can be seen from Fig. 13 on the transmitter side in one-shot mode, column vectors are chosen from a codebook and used as precoding matrix. The example considered in Fig. 13 utilizes four transmit antennas, i.e. Nₜ=4. On the receiver side in one-shot mode from the same codebook, i.e. from the same matrix, column vectors are chosen accordingly, for example for maximizing a channel capacity as indicated in Fig. 13. The preferable column subset is then signaled to the transmitter. In tracking mode, the transmitter applies a signalled update matrix to the previous precoding matrix according to the description above. The receiver evaluates an optimized update matrix index according to what was described above and feedbacks it to the transmitter. In tracking mode, the initial precoding matrix, which is determined in one-shot mode, can be set using one-shot mode. From there it can be updated using tracking mode.

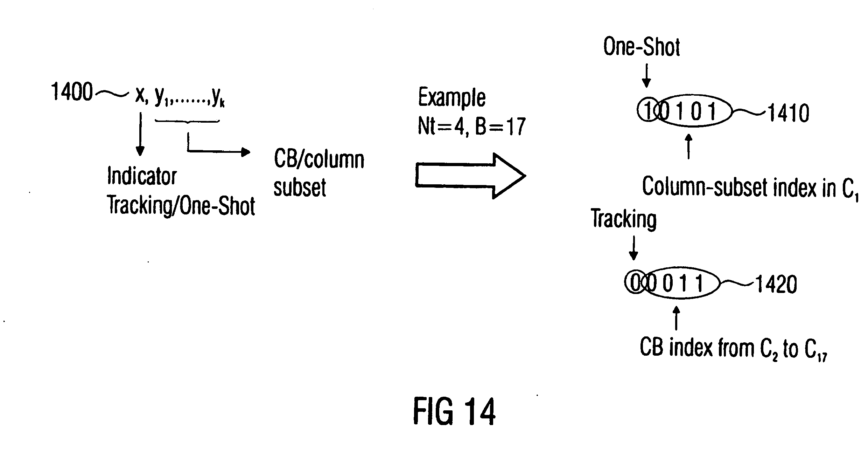

Fig. 14 shows an embodiment of a signaling scheme. It is supposed that a signaling word comprises a number of digits according to the signaling word 1400. In the embodiment depicted in Fig. 14, the signaling word 1400 comprises an indicator at its first digit, indicating whether tracking or one-shot mode is used. The other digits refer to a codebook index in case of tracking mode, respectively, to a column subset of a matrix in one-shot mode. Again considering the example of four transmit antennas, i.e. Nₜ=4, the two sample code words 1410 and 1420 may result. The sample signaling word 1410 has a one in its first digit, indicating one-shot note. Therefore, the potential transmitter would know that the last digits refer to a column subset index C₁. If the signaling word 1420 is received, the transmitter would know by the first digit being equal to zero that tracking mode is used. The last 4 digits of the signaling word then refer to a codebook index for example for the codebook C₂ to C₁₇. The codebook considered in Fig. 17 for tracking mode and one-shot mode comprises B=17 matrices of which the first C₁ is dedicated to one-shot mode and C₂ to C₁₇ are dedicated to tracking mode.

The first bit of the 5-bit index is the indicating bit if tracking or one-shot mode is used. The other bits respectively, are column subscript indices in the one-shot case, and codebook indices in the tracking case. In this way, the same feedback bits can be used for both modes.

Obviously, if the switching between the two modes is performed on a periodical basis according to a predetermined time scheme, the first bit x in Fig. 14 is not necessary and can be omitted. The described embodiments can be straight forwardly combined with for example OFDM (OFDM = orthogonal frequency division multiplexing) - Systems, in which precoding should be conducted for subcarriers or chunks of subcarriers. In general, the embodiments can be used with any multiple access system.

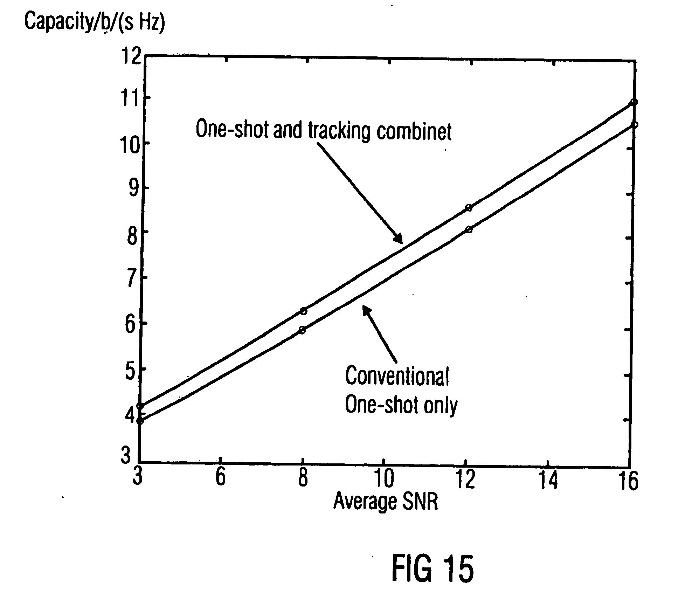

Fig. 15 shows a viewgraph illustrating the achievable capacity improvements with an embodiment. Fig. 15 shows two capacity figures in b/(s Hz) versus an average SNR of the embodiment and the conventional scheme in one-shot mode only. The example scenario utilizes Nₜ=4 transmit antennas, Nᵣ=2 receive antennas, and Nₛ=2 data streams. When severe radio channel changes are to be expected in a certain environment the conventional scheme only uses one-shot mode, contrary hereto the embodiment can utilize the above-mentioned switching mechanism. The capacity achieved with the embodiment is shown at the top, the capacity achieved with the conventional concept is shown at the bottom of Fig. 15. It can be seen that the embodiment achieves about 0.5 b/(s Hz) capacity gain, using one extra bit as mode indicator.

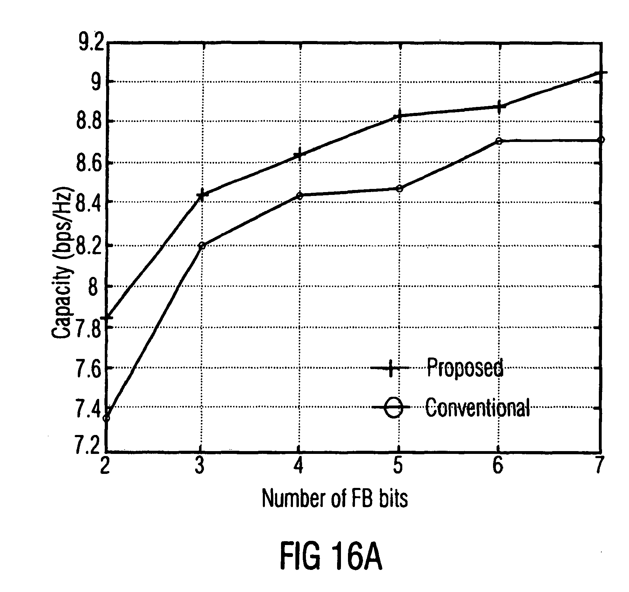

Fig. 16a shows a viewgraph of an evaluated link capacity in b/(s Hz) versus a number of feedback bits. For the simulation of the capacity figures depicted in Fig. 15 a number of Nₜ=4 transmit antennas, a number of Nᵣ=2 receive antennas, and a number of Nₛ=2 data streams were assumed. The viewgraph shows the conventional scheme indicated by circles and the embodiment using crosses. It can be seen that the embodiments achieve a higher capacity independent of the number of feedback bits used. It is therefore an advantage of the embodiments that they provide a higher link and system capacity.

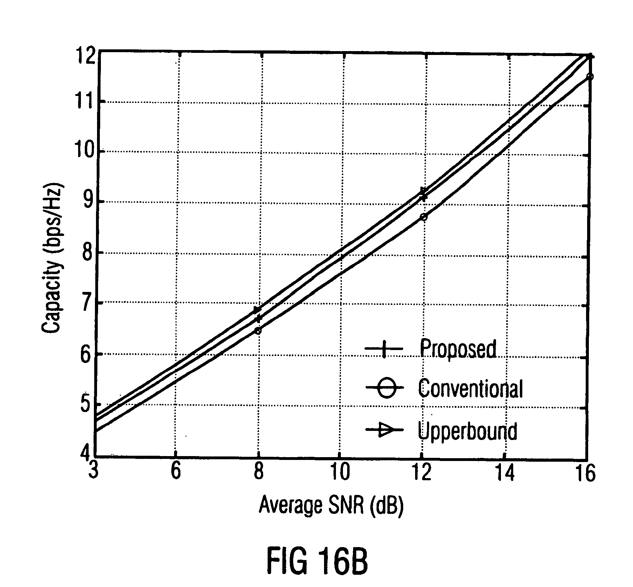

Fig. 16b shows another viewgraph, showing a link capacity in b/(s Hz) versus an average SNR. For the simulations, of which the results are depicted in Fig. 16b, a number of Nₜ=4 transmit antennas, a number of Nᵣ=2 receive antennas, and a number of Nₛ=2 data streams were assumed. The viewgraph shows three capacity diagrams one of the proposed approach indicated by crosses, one of the conventional approach indicated by circles, and one of the theoretical upper bound (Shannon bound). The viewgraph shows that the capacity of the proposed approach is closer to the upper bound than the conventional approach. Embodiments therefore provide the advantage that the capacity of a link or system is higher than for the conventional approach.

In summary embodiments provide the advantage that a higher capacity can be achieved in MIMO transmission systems using precoding. Furthermore, less feedback is required for embodiments than for conventional approaches. Therewith, the spectral efficiency of MIMO-systems can be improved, extra capacity due to the reduced feedback can be utilized.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is therefore a machine readable carrier, the program code being operative for performing the inventive methods when the computer program products runs on a computer. In other words, the inventive methods are, therefore, a computer program having a program code adapted to perform at least one of the inventive methods when the computer program runs on a computer.

## Claims

1. Receiver apparatus (1,00,150) for controlling a precoding operation in a transmitter for simultaneously transmitting multiple data streams within a transmission scheme having a first number of transmit antennas and a second number of receive antennas, the first number and the second number being larger than one, comprising
a channel estimator (110, 155) for estimating a radio channel between the transmitter and the receiver apparatus (100) based on a received signal to determine a radio channel estimate (**H**ₖ);
a processing unit (120,170) for providing possible new precoding matrices (**C**'ₘ) for being applied to the multiple data streams based on update matrices (**C**ₘ) stored in an update codebook (122,175) and an old precoding matrix (**F**ₖ₋ᵢ), the possible new precoding matrices (**C**'ₘ), the update matrices (**C**ₘ) and the old precoding matrix (**F**ₖ₋₁) each including at least two rows and at least two columns;
a searcher (130,160) for searching a new precoding matrix fulfilling an optimization criterion based on the radio channel estimate (**H**ₖ) among the possible new precoding matrices (**C**'ₘ); and
a transmit unit (140) for transmitting an update matrix index (mₒₚₜ), which is associated with the new precoding matrix for being applied to the multiple data streams.

2. Receiver apparatus (100,150) of claim 1, wherein the first and the second number are such that a precoding matrix (**F**ₖ, **F**ₖ₋₁) has more rows than columns.

3. Receiver apparatus (100,150) of one of the claims 1 or 2, wherein the processing unit (120,170) is adapted for providing a new possible precoding matrix by multiplication (170), the multiplication (170) having an update matrix (**C**ₘ) and the old precoding matrix (**F**ₖ₋₁) as multiplication partners.

4. Receiver apparatus of claim 3, wherein the processing unit (120,170) is adapted for providing a new possible precoding matrix by multiplication (170), the multiplication (170) having an update matrix (**C**ₘ) and the old precoding matrix (**F**ₖ₋₁) as multiplication partners, wherein the multiplication has multiplication partners in a certain order extending from left to right, and wherein the old precoding matrix is on a right hand side of the certain order, and wherein the update matrix is on a left hand side of the certain order.

5. Receiver apparatus (100,150) of one of the claims 1 to 4, wherein the transmit unit (140) is adapted for transmitting a special update matrix index, which refers to an initialization update matrix on a periodical time scale.

6. Receiver apparatus (100,150) of claim 1 to 5, wherein the processing unit (120,170) is adapted for providing the new possible precoding matrices (**C**'ₘ), where m is a codebook index larger than or equal to one and smaller than or equal to an update matrices codebook size B, by multiplying the old precoding matrix **F**ₖ₋₁, where k is a time index and k-1 indicates a former time index, from the right hand side by the update matrices **C**ₘ based on the equation: $\left\{{C}_{1}^{ʹ}⋯{C}_{l}^{ʹ}\right\} = \left\{{C}_{p}⁢{F}_{k - 1}⋯{C}_{q}⁢{F}_{k - 1}\right\}$
wherein 1 is an integer smaller than or equal to B, p is a lower multiplication index greater than or equal to one and q is a higher multiplication index smaller than or equal to B.

7. Receiver apparatus (100,150) according to one of the claims 1 to 6, wherein the searcher (130) is adapted for searching the new possible precoding matrices **C**'ₘ, where m is a codebook index running from one to the update matrices codebook size B, in order to optimize a channel capacity in a range of 50% to 100% of the maximum channel capacity at least based on the radio channel estimate **H**ₖ, a noise power and the new possible precoding matrices C'ₘ to obtain an optimum codebook index mₒₚₜ according to ${m}_{opt} = arg {max}_{m} Capacity \left(H, {σ}^{2}, \left\{{C}_{m}^{ʹ}\right\}\right) ,$
where σ² is the noise power or variance.

8. Receiver apparatus (100,150) of claim 7, wherein the searcher (130,160) maximizes the capacity on the basis of a minimum-mean-square-error-successive-interference-cancellation (MMSE-SIC) detection.

9. Receiver apparatus (100,150) of one of the claims 1 to 8, wherein the processing unit (120,170) further comprises a storage means for storing the codebook, the codebook having at least two update matrices to be used in a precoding operation, each update matrix being associated with an update matrix index, the update matrices being calculated by generating a first matrix and generating a second matrix being correlated with the first matrix by a correlation degree and combining the first matrix and the second matrix to obtain one update matrix, where for calculating different update matrices, a different correlation degree or a different first matrix and the same correlation degree is used.

10. Receiver apparatus (100,150) of one of the claims 1 to 9, further comprising a detector for detecting an event, and the transmit unit (140) being adapted for transmitting absolute precoding information at a first time instant in response to a detected occurrence of the event and for transmitting differential precoding information at a second time instant different from the first time instant.

11. Receiver apparatus (100,150) of claim 10, wherein the detector is adapted for detecting as the event, a lapse of a predefined period since an earlier time instant at which the absolute precoding information was sent or, as the event, a situation in which the absolute precoding information is more advantageous for a communication link than the differential precoding information.

12. Receiver apparatus (100,150) of one of the claims 1 to 11, wherein an update matrix is always a square matrix, i.e. having the same number of rows and columns.

13. Receiver apparatus (100,150) of one of the claims 1 to 12, being adapted for receiving multi-carrier signals and being operative for controlling a precoding operation in each of or a group of carriers in the multi-carrier signals.

14. A method for controlling a precoding operation in a transmitter for simultaneously transmitting multiple data streams within a transmission scheme having a first number of transmit antennas and a second number of receive antennas, the first number and the second number being larger than one, comprising estimating a radio channel between the transmitter and a receiver based on a received signal to determine a radio channel estimate;
providing possible new precoding matrices for being applied to the multiple data streams based on update matrices stored in an update codebook and an old precoding matrix, the possible new precoding matrices, the update matrices and the old precoding matrix each including at least two rows and at least two columns;
searching a new precoding matrix fulfilling an optimization criterion based on the radio channel estimate among the possible new precoding matrices; and
transmitting an update matrix index, which is associated with the new precoding matrix for being applied to the multiple data streams.

15. Computer program having a program code adapted to perform the method of claim 14 when the program code runs on a computer.

16. Transmitter apparatus (200,250) for transmitting a precoded signal simultaneously transmitting multiple data streams, the signal being precoded using an updated precoding matrix (**F**ₖ) within a transmission scheme having a first number of transmit antennas and a second number of receive antennas, the first number and the second number being larger than one, comprising
a receive unit (210) for receiving a received update matrix index (mₒₚₜ) ;
a storage means (220) for storing a codebook having different update matrices, each update matrix (Cₘ) having associated therewith an update matrix index (m), an update matrix (Cₘ) having at least two rows and at least two columns; and
a combiner (240,265) for combining an earlier used precoding matrix (**F**ₖ₋₁) (245,260) and the update matrix (**C**_{mₒₚₜ}) associated with the received update matrix index (mₒₚₜ) to obtain the updated precoding matrix (**F**ₖ) for being applied to the multiple data streams.

17. Transmitter apparatus (200,250) of claim 16 , wherein the combiner (240,265) is adapted for obtaining the updated precoding matrix (**F**ₖ) by multiplication, the multiplication having the earlier used precoding matrix (**F**ₖ₋₁) and the update matrix (**C**_{mₒₚₜ}) as multiplication partners and the earlier used precoding matrix (**F**ₖ₋₁) being multiplied on the right hand side.

18. Transmitter apparatus (200,250) of one of the claims 16 or 17, wherein the second number of receive antennas is larger than one, and a precoding matrix (**F**ₖ₋₁,**F**ₖ) is a square matrix.

19. Transmitter apparatus (200,250) of one of the claims 16 to 18, wherein the first and the second number are such that a precoding matrix (**F**ₖ, **F**ₖ₋₁) has more rows than columns.

20. Transmitter apparatus (200,250) of one of the claims 16 to 19, wherein an update matrix (**C**ₘ) is a square matrix, a symmetric matrix or a conjugate symmetric matrix.

21. Transmitter apparatus (200,250) of claim one of the claims 16 to 20, being adapted for initializing the precoding matrix (**F**ₖ) periodically on a predefined time scale or on reception of a special signal for initialization or on reception of an update matrix index or on reception of a command to do initialization.

22. Transmitter apparatus (200,250) of one of the claims 16 to 21, wherein the combiner (240,265) is adapted for multiplying the earlier used precoding matrix **F**ₓ₋₁. k being a time index and k-1 indicating an earlier time index, with the update matrix **C**_{mₒₚₜ} to obtain an updated precoded matrix **F**ₖ based on the equation ${F}_{k} = {C}_{{m}_{opt}} ⁢ {F}_{k - 1}$

23. Transmitter apparatus (200,250) of one of the claims 16 to 22, further comprising a precoder for applying the earlier used precoding matrix (**F**ₖ₋₁) or the updated precoding matrix (**F**ₖ) to a transmit signal.

24. Transmitter apparatus (200,250) of one of the claims 16 to 23, wherein the codebook having at least two update matrices to be used in a precoding operation, each update matrix being associated with an update matrix index, the update matrices being calculated by generating a first matrix, generating a second matrix being correlated with the first matrix by a correlation degree, and combining the first matrix and the second matrix to obtain one update matrix, where for calculating different update matrices, a different correlation degree or a different first matrix and the same correlation degree is used.

25. Transmitter apparatus (200,250) of one of the claims 16 to 24, further comprising a detector for detecting an event and a means for updating the precoding matrix with an absolute precoding information at a first time instant in response to a detected occurrence of the event or for updating the precoding matrix with differential precoding information at a second time instant different from the first time instant.

26. Transmitter apparatus (200,250) of claim 25, wherein the detector is adapted for detecting as the event, a lapse of a predefined period since an earlier time instant at which the absolute precoding information was received or, as the event, a situation in which the absolute precoding information is more advantageous for a communication link than the differential precoding information.

27. Transmitter apparatus (200,250) of one of the claims 16 to 26, being adapted for transmitting multi-carrier signals and being operative for controlling a precoding operation in each of or a group of carriers in the multi-carrier signals.

28. Method for transmitting a precoded signal simultaneously transmitting multiple data streams, the signal being precoded using a precoding matrix in a transmitter within a transmission scheme having a first number of transmit antennas and a second number of receive antennas, the first number and the second number being larger than one, comprising
receiving a received update matrix index (mₒₚₜ);
storing a codebook having different update matrices, each update matrix (Cₘ) having associated therewith an update matrix index, an update matrix (Cₘ) having at least two rows and at least two columns;
combining an earlier used precoding matrix and the update matrix (Cmₒₚₜ) associated with the received update matrix index (mₒₚₜ) to obtain the updated precoding matrix for being applied to the multiple data streams.

29. Computer program having a program code adapted to perform the method of claim 28 when the program code runs on a computer.

30. A transmitted precoding feedback signal having a feedback signal format for performing the method of updating of claim 28 when the feedback signal is input into a transmitter according to claim 16, the feedback signal comprising an update matrix index associated with an update matrix to be combined at the transmitter with an earlier used precoding matrix to obtain an updated precoding matrix, said update matrix having at least two rows and at least two columns and being included in a codebook at the transmitter.

## Patentansprüche

1. Empfängervorrichtung (100, 150) zum Steuern einer Vorcodierungsoperation in einem Sender zum gleichzeitigen Senden mehrerer Datenströme in einem Sendeschema mit einer ersten Anzahl von Sendeantennen und einer zweiten Anzahl von Empfangsantennen, wobei die erste Anzahl und die zweite Anzahl größer als eins sind, die folgende Merkmale umfasst:
eine Kanalschätzeinrichtung (110, 155) zum Schätzen eines Funkkanals zwischen dem Sender und der Empfängervorrichtung (100) basierend auf einem empfangenen Signal, um eine Funkkanalschätzung (**H**ₖ) zu bestimmen;
eine Verarbeitungseinheit (120, 170) zum Bereitstellen möglicher neuer Vorcodierungsmatrizen (**C**'ₘ) zum Anlegen an die mehreren Datenströme basierend auf Aktualisierungsmatrizen (**C**ₘ), die in einem Aktualisierungscodebuch (122, 175) gespeichert sind, und einer alten Vorcodierungsmatrix (**F**ₖ₋₁), wobei die möglichen neuen Vorcodierungsmatrizen (**C**'ₘ), die Aktualisierungsmatrizen (**C**ₘ) und die alte Vorcodierungsmatrix (**F**ₖ₋₁) jeweils zumindest zwei Zeilen und zumindest zwei Spalten umfassen;
eine Sucheinrichtung (130, 160) zum Suchen einer neuen Vorcodierungsmatrix, die ein Optimierungskriterium erfüllt, basierend auf der Funkkanalschätzung (**H**ₖ), aus den möglichen neuen Vorcodierungsmatrizen (**C**'ₘ); und
eine Sendeeinheit (140) zum Senden eines Aktualisierungsmatrixindex (mₒₚₜ), der der neuen Vorcodierungsmatrix zum Anlegen an die mehreren Datenströme zugeordnet ist.

2. Empfängervorrichtung (100, 150) gemäß Anspruch 1, bei der die erste und die zweite Anzahl derart sind, dass eine Vorcodierungsmatrix (**F**ₖ, **F**ₖ₋₁) mehr Zeilen als Spalten aufweist.

3. Empfängervorrichtung (100, 150) gemäß einem der Ansprüche 1 oder 2, bei der die Verarbeitungseinheit (120, 170) angepasst ist zum Bereitstellen einer neuen möglichen Vorcodierungsmatrix durch Multiplikation (170), wobei die Multiplikation (170) eine Aktualisierungsmatrix (**C**ₘ) und die alte Vorcodierungsmatrix (**F**ₖ₋₁) als Multiplikationspartner aufweist.

4. Empfängervorrichtung gemäß Anspruch 3, bei der die Verarbeitungseinheit (120, 170) angepasst ist zum Bereitstellen einer neuen möglichen Vorcodierungsmatrix durch Multiplikation (170), wobei die Multiplikation (170) eine Aktualisierungsmatrix (**C**ₘ) und die alte Vorcodierungsmatrix (**F**ₖ₋₁) als Multiplikationspartner aufweist, wobei die Multiplikation Multiplikationspartner in einer bestimmten Reihenfolge aufweist, die sich von links nach rechts erstreckt, und wobei die alte Vorcodierungsmatrix auf einer rechten Seite der bestimmten Reihenfolge ist, und wobei die Aktualisierungsmatrix auf einer linken Seite der bestimmten Reihenfolge ist.

5. Empfängervorrichtung (100, 150) gemäß einem der Ansprüche 1 bis 4, bei der die Sendeeinheit (140) angepasst ist zum Senden eines speziellen Aktualisierungsmatrixindex, der sich auf eine Initialisierungsaktualisierungsmatrix auf einer periodischen Zeitskala bezieht.

6. Empfängervorrichtung (100, 150) gemäß einem der Ansprüche 1 bis 5, bei der die Verarbeitungseinheit (120, 170) angepasst ist zum Bereitstellen der neuen möglichen Vorcodierungsmatrizen (**C**'ₘ), wobei m ein Codebuchindex ist, der größer oder gleich eins ist und kleiner oder gleich einer Aktualisierungsmatrizencodebuchgröße B ist; durch Multiplizieren der alten Vorcodierungsmatrix **F**ₖ₋₁, wobei k ein Zeitindex ist und k-1 einen früheren Zeitindex anzeigt, von rechts mit den Aktualisierungsmatrizen **C**ₘ basierend auf der Gleichung: $\left\{{C}_{1}^{ʹ}⋯{C}_{1}^{ʹ}\right\} = \left\{{C}_{p}⁢{F}_{k - 1}⋯{C}_{q}⁢{F}_{k - 1}\right\}$
wobei 1 eine Ganzzahl kleiner oder gleich B ist, p ein niedrigerer Multiplikationsindex größer oder gleich eins ist und q ein höherer Multiplikationsindex kleiner oder gleich B ist.

7. Empfängervorrichtung (100, 150) gemäß einem der Ansprüche 1 bis 6, bei der die Sucheinrichtung (130) angepasst ist zum Suchen der neuen möglichen Vorcodierungsmatrizen **C**'ₘ, wobei m ein Codebuchindex ist, der von eins zu der Aktualisierungsmatrizencodebuchgröße B verläuft, um eine Kanalkapazität in einem Bereich von 50 % bis 100 % der maximalen Kanalkapazität zu optimieren, zumindest basierend auf der Funkkanalschätzung **H**ₖ, einer Rauschleistung und den neuen möglichen Vorcodierungsmatrizen **C**'ₘ, um einen optimalen Codebuchindex mₒₚₜ zu erhalten, gemäß ${m}_{opt} = arg {max}_{m} Capacity \left(H, {σ}^{2}, \left\{{Cʹ}_{m}\right\}\right) ,$
wobei σ² die Rauschleistung oder Varianz ist.

8. Empfängervorrichtung (100, 150) gemäß Anspruch 7, bei der die Sucheinrichtung (130, 160) die Kapazität auf der Basis einer MMSE-SIC-Erfassung (MMSE-SIC = minimum-mean-square-error-successive-interference-cancellation = Minimaler-Mittlerer-Quadratischer-Fehler-Folgeenstörung) maximiert.

9. Empfängervorrichtung (100, 150) gemäß einem der Ansprüche 1 bis 8, bei der die Verarbeitungseinheit (120, 170) ferner eine Speichereinrichtung zum Speichern des Codebuchs umfasst, wobei das Codebuch zumindest zwei Aktualisierungsmatrizen aufweist, die in einer Vorcodierungsoperation zu verwenden sind, wobei jede Aktualisierungsmatrix einem Aktualisierungsmatrixindex zugeordnet ist, wobei die Aktualisierungsmatrizen berechnet werden durch Erzeugen einer ersten Matrix und Erzeugen einer zweiten Matrix, die um einen Korrelationsgrad mit der ersten Matrix korreliert ist, und Kombinieren der ersten Matrix und der zweiten Matrix, um eine Aktualisierungsmatrix zu erhalten, wobei zum Berechnen unterschiedliche Aktualisierungsmatrizen, ein unterschiedlicher Korrelationsgrad oder eine unterschiedliche erste Matrix und der gleiche Korrelationsgrad verwendet werden.

10. Empfängervorrichtung (100, 150) gemäß einem der Ansprüche 1 bis 9, die ferner einen Detektor zum Erfassen eines Ereignisses umfasst, und bei der die Sendeeinheit (140) angepasst ist zum Senden absoluter Vorcodierungsinformationen zu einem ersten Zeitpunkt ansprechend auf ein erfasstes Auftreten des Ereignisses und zum Senden differentieller Vorcodierungsinformationen zu einem zweiten Zeitpunkt, der sich von dem ersten Zeitpunkt unterscheidet.

11. Empfängervorrichtung (100, 150) gemäß Anspruch 10, bei dem der Detektor angepasst ist, um als das Ereignis ein Verstreichen einer vordefinierten Periode seit einem früheren Zeitpunkt zu erfassen, zu dem die absoluten Vorcodierungsinformationen gesendet wurden, oder als das Ereignis eine Situation zu erfassen, in der die absoluten Vorcodierungsinformationen für eine Kommunikationsverbindung vorteilhafter sind als die differentiellen Vorcodierungsinformationen.

12. Empfängervorrichtung (100, 150) gemäß einem der Ansprüche 1 bis 11, bei der eine Aktualisierungsmatrix immer eine quadratische Matrix ist, d.h. die die gleiche Anzahl von Zeilen und Spalten aufweist.

13. Empfängervorrichtung (100, 150) gemäß einem der Ansprüche 1 bis 12, die angepasst ist zum Empfangen von Mehrträgersignalen und wirksam ist zum Steuern einer Vorcodierungsoperation in jedem oder in einer Gruppe von Trägem in den Mehrträgersignalen.

14. Ein Verfahren zum Steuern einer Vorcodierungsoperation in einem Sender zum gleichzeitigen Senden mehrerer Datenströme in einem Sendeschema mit einer ersten Anzahl von Sendeantennen und einer zweiten Anzahl von Empfangsantennen, wobei die erste Anzahl und die zweite Anzahl größer als eins sind, das folgende Schritte umfasst:
Schätzen eines Funkkanals zwischen dem Sender und einem Empfänger basierend auf einem empfangenen Signal, um eine Funkkanalschätzung zu bestimmen;
Bereitstellen möglicher neuer Vorcodierungsmatrizen zum Anlegen an die mehreren Datenströme basierend auf Aktualisierungsmatrizen, die in einem Aktualisierungscodebuch gespeichert sind, und einer alten Vorcodierungsmatrix, wobei die möglichen neuen Vorcodierungsmatrizen, die Aktualisierungsmatrizen und die alte Vorcodierungsmatrix jeweils zumindest zwei Zeilen und zumindest zwei Spalten umfassen;
Suchen einer neuen Vorcodierungsmatrix, die ein Optimierungskriterium erfüllt, basierend auf der Funkkanalschätzung, aus den möglichen neuen Vorcodierungsmatrizen; und
Senden eines Aktualisierungsmatrixindex, der der neuen Vorcodierungsmatrix zugeordnet ist, zum Anlegen an die mehren Datenströme.

15. Corriputerprogramm mit einem Programmcode, der angepasst ist, um das Verfahren gemäß Anspruch 14 durchzuführen, wenn der Programmcode auf einem Computer läuft.

16. Sendervorrichtung (200, 250) zum Senden eines vorcodierten Signals, die gleichzeitig mehrere Datenströme sendet, wobei das Signal vorcodiert ist unter Verwendung einer aktualisierten Vorcodierungsmatrix (**F**ₖ) innerhalb eines Sendeschemas mit einer ersten Anzahl von Sendeantennen und einer zweiten Anzahl von Empfangsantennen, wobei die erste Anzahl und die zweite Anzahl größer als eins sind, die folgende Merkmale umfasst:
eine Empfangseinheit (210) zum Empfangen eines empfangenen Aktualisierungsmatrixindex (mₒₚₜ);
eine Speichereinrichtung (220) zum Speichern eines Codebuchs mit unterschiedlichen Aktualisierungsmatrizen, wobei jeder Aktualisierungsmatrix (Cm) ein Aktualisierungsmatrixindex (m) zugeordnet ist, wobei eine Aktualisierungsmatrix (Cm) zumindest zwei Zeilen und zumindest zwei Spalten aufweist; und
einen Kombinierer (240, 265) zum Kombinieren einer früher verwendeten Vorcodierungsmatrix (**F**ₖ₋₁) (245, 260) und der Aktualisierungsmatrix (**C**mₒₚₜ), die dem empfangenen Aktualisierungsmatrixindex (mₒₚₜ) zugeordnet ist, um die aktualisierte Vorcodierungsmatrix (**F**ₖ) zum Anlegen an die mehreren Datenströme zu erhalten.

17. Sendervorrichtung (200, 250) gemäß Anspruch 16, bei der der Kombinierer (240, 265) angepasst ist zum Erhalten der aktualisierten Vorcodierungsmatrix (**F**ₖ) durch Multiplikation, wobei die Multiplikation die früher verwendete Vorcodierungsmatrix (**F**ₖ₋₁) und die Aktualisierungsmatrix (**C**mₒₚₜ) als Multiplikationspartner aufweist, und die früher verwendete Vorcodierungsmatrix (**F**ₖ₋₁) auf der rechten Seite multipliziert wird.

18. Sendervorrichtung (200, 250) gemäß einem der Ansprüche 16 oder 17, bei der die zweite Anzahl von Empfangsantennen größer ist als eins, und eine Vorcodierungsmatrix (**F**ₖ₋₁, **F**ₖ) eine quadratische Matrix ist.

19. Sendervorrichtung (200, 250) gemäß einem der Ansprüche 16 bis 18, bei der die erste und zweite Anzahl derart sind, dass eine Vorcodierungsmatrix (**F**ₖ, **F**ₖ₋₁) mehr Zeilen als Spalten aufweist.

20. Sendervorrichtung (200, 250) gemäß einem der Ansprüche 16 bis 19, bei der eine Aktualisierungsmatrix (**C**ₘ) eine quadratische Matrix, eine symmetrische Matrix oder eine konjugierte symmetrische Matrix ist.

21. Sendervorrichtung (200, 250) gemäß einem der Ansprüche 16 bis 20, die angepasst ist zum periodischen Initialisieren der Vorcodierungsmatrix (**F**ₖ) auf einer vordefinierten Zeitskala oder auf den Empfang eines speziellen Signals für Initialisierung hin oder auf den Empfang eines Aktualisierungsmatrixindex hin oder auf den Empfang eines Befehls zur Durchführung einer Initialisierung hin.

22. Sendervorrichtung (200, 250) gemäß einem der Ansprüche 16 bis 21, bei der der Kombinierer (240, 265) angepasst ist zum Multiplizieren der früher verwendeten Vorcodierungsmatrix **F**ₖ₋₁, wobei k ein Zeitindex ist und k-1 einen früheren Zeitindex anzeigt, mit der Aktualisierungsmatrix C_{mₒₚₜ} um eine aktualisierte Vorcodierungsmatrix **F**ₖ zu erhalten, basierend auf der Gleichung: ${F}_{k} = {C}_{{m}_{opt}} ⁢ {F}_{k - 1}$

23. Sendervorrichtung (200, 250) gemäß einem der Ansprüche 16 bis 22, die ferner einen Vorcodierer umfasst zum Anlegen der früher verwendeten Vorcodierungsmatrix (**F**ₖ₋₁) oder der aktualisierten Vorcodierungsmatrix (**F**ₖ) an ein Sendesignal.

24. Sendervorrichtung (200, 250) gemäß einem der Ansprüche 16 bis 23, bei der das Codebuch zumindest zwei Aktualisierungsmatrizen aufweist, die in einer Vorcodierungsoperation zu verwenden sind, wobei jede Aktualisierungsmatrix einem Aktualisierungsmatrixindex zugeordnet ist, wobei die Aktualisierungsmatrizen berechnet werden durch Erzeugen einer ersten Matrix, Erzeugen einer zweiten Matrix, die um einen Korrelationsgrad mit der ersten Matrix korreliert ist, und Kombinieren der ersten Matrix und der zweiten Matrix, um eine Aktualisierungsmatrix zu erhalten, wobei zum Berechnen unterschiedliche Aktualisierungsmatrizen; ein unterschiedlicher Korrelationsgrad oder eine unterschiedliche erste Matrix und der gleiche Korrelationsgrad verwendet werden.

25. Sendervorrichtung (200, 250) gemäß einem der Ansprüche 16 bis 24, die ferner einen Detektor umfasst zum Erfassen eines Ereignisses und einer Einrichtung zum Aktualisieren der Vorcodierungsmatrix mit absoluten Vorcodierungsinformationen zu einem ersten Zeitpunkt ansprechend auf ein erfasstes Auftreten des Ereignisses oder zum Aktualisieren der Vorcodierungsmatrix mit differentiellen Vorcodierungsinformationen zu einem zweiten Zeitpunkt, der sich von dem ersten Zeitpunkt unterscheidet.

26. Sendervorrichtung (200, 250) gemäß Anspruch 25, bei der der Detektor angepasst ist, um als das Ereignis ein Verstreichen einer vordefinierten Periode seit einem früheren Zeitpunkt zu erfassen, zu dem die absoluten Vorcodierungsinformationen empfangen wurden, oder um als das Ereignis eine Situation zu erfassen, in der die absoluten Vorcodierungsinformationen für eine Kommunikationsverbindung vorteilhafter sind als die differentiellen Vorcodierungsinformationen.

27. Sendervorrichtung (200, 250) gemäß einem der Ansprüche 16 bis 26, die angepasst ist zum Senden von Mehrträgersignalen und wirksam ist zum Steuern einer Vorcodierungsoperation in jedem oder in einer Gruppe von Trägern in den Mehrträgersignalen.

28. Verfahren zum Senden eines vorcodierten Signals, das gleichzeitig mehrere Datenströme sendet, wobei das Signal vorcodiert ist unter Verwendung einer Vorcodierungsmatrix in einem Sender in einem Sendeschema mit einer ersten Anzahl von Sendeantennen und einer zweiten Anzahl von Empfangsantennen, wobei die erste Anzahl und die zweite Anzahl größer als eins sind, das folgende Schritte umfasst:
Empfangen eines empfangenen Aktualisierungsmatrixindex (mₒₚₜ);
Speichern eines Codebuchs mit unterschiedlichen Aktualisierungsmatrizen, wobei jeder Aktualisierungsmatrix (Cₘ) ein Aktualisierungsmatrixindex zugeordnet ist, wobei eine Aktualisierungsmatrix (Cₘ) zumindest zwei Zeilen und zumindest zwei Spalten aufweist;
Kombinieren einer früher verwendeten Vorcodierungsmatrix und der Aktualisierungsmatrix (Cmₒₚₜ), die dem empfangenen Aktualisierungsmatrixindex (mₒₚₜ) zugeordnet ist, um die aktualisierte Vorcodierungsmatrix zum Anlegen an die mehreren Datenströme zu empfangen.

29. Computerprogramm mit einem Programmcode, der angepasst ist, um das Verfahren gemäß Anspruch 28 durchzuführen, wenn der Programmcode auf einem Computer läuft.

30. Ein gesendetes Vorcodierungsrückkopplungssignal mit einem Rückkopplungssignalformat zum Durchführen des Verfahrens zum Aktualisieren gemäß Anspruch 28, wenn das Rückkopplungssignal in einen Sender gemäß Anspruch 16 eingegeben wird, wobei das Rückkopplungssignal einen Aktualisierungsmatrixindex umfasst, der einer Aktualisierungsmatrix zugeordnet ist, die an dem Sender mit einer früher verwendeten Vorcodierungsmatrix zu kombinieren ist, um eine aktualisierte Vorcodierungsmatrix zu erhalten, wobei die Aktualisierungsmatrix zumindest zwei Zeilen und zumindest zwei Spalten aufweist und in einem Codebuch an dem Sender enthalten ist.

## Revendications

1. Appareil récepteur (100, 150) pour commander une opération de précodage dans un émetteur destiné à émettre simultanément de multiples flux de données dans un schéma d'émission ayant un premier nombre d'antennes d'émission et un deuxième nombre d'antennes de réception, le premier nombre et le deuxième nombre étant supérieurs à un, comprenant
un estimateur de canal (110, 155) destiné à estimer un canal de radiocommunication entre l'appareil émetteur et l'appareil récepteur (100) sur base d'un signal reçu, pour déterminer une estimation de canal de radiocommunication (Hₖ);
une unité de traitement (120, 170) destinée à fournir de possibles nouvelles matrices de précodage (C'ₘ) destinées à être appliqués aux multiples flux de données sur base de matrices de mise à jour (Cₘ) mémorisées dans une table de codage de mise à jour (122, 175) et d'une ancienne matrice de précodage (Fₖ₋₁), les possibles nouvelles matrices de précodage (C'ₘ), les matrices de mise à jour (Cₘ) et l'ancienne matrice de précodage (Fₖ₋₁) comportant, chacune, au moins deux rangées et au moins deux colonnes;
un chercheur (130, 160) destiné à chercher une nouvelle matrice de précodage remplissant un critère d'optimisation sur base de l'estimation de canal de radiocommunication (Hₖ) parmi les possibles nouvelles matrices de précodage (C'ₘ); et
une unité d'émission (140) destinée à émettre un indice de matrice de mise à jour (mₒₚₜ) qui est associé à la nouvelle matrice de précodage à appliquer aux multiples flux de données.

2. Appareil récepteur (100, 150) selon la revendication 1, dans lequel le premier et le deuxième nombre sont tels qu'une matrice de précodage (Fₖ, Fₖ₋₁) a plus de rangées que de colonnes.

3. Appareil récepteur (100, 150) selon l'une des revendications 1 ou 2, dans lequel l'unité de traitement (120, 170) est adaptée pour fournir une nouvelle possible matrice de précodage par multiplication (170), la multiplication (170) ayant une matrice de mise à jour (Cₘ) et l'ancienne matrice de précodage (Fₖ₋₁) comme partenaires de multiplication.

4. Appareil récepteur selon la revendication 3, dans lequel l'unité de traitement (120, 170) est adaptée pour fournir une nouvelle possible matrice de précodage par multiplication (170), la multiplication (170) ayant une matrice de mise à jour (Cₘ) et l'ancienne matrice de précodage (Fₖ₋₁) comme partenaires de multiplication, dans lequel la multiplication a des partenaires de multiplication dans un certain ordre s'étendant de gauche à droite, et dans lequel l'ancienne matrice de précodage est du côté droit du certain ordre, et dans lequel la matrice de mise à jour est du côté gauche du certain ordre.

5. Appareil récepteur (100,150) selon l'une des revendications 1 à 4, dans lequel l'unité d'émission (140) est adaptée pour émettre un indice de matrice de mise à jour spécial qui se réfère à une matrice de mise à jour d'initialisation sur une échelle de temps périodique.

6. Appareil récepteur (100, 150) selon les revendications 1 à 5, dans lequel l'unité de traitement (120, 170) est adaptée pour fournir les nouvelles possibles matrices de précodage (C'ₘ), où m est un indice de table de codage supérieur ou égal à un et inférieur ou égal à une grandeur de table de codage de matrices de mise à jour B, en multipliant l'ancienne matrice de précodage Fₖ₋₁, où k est un indice de temps et k-1 indique un indice de temps antérieur, du côté droit par les matrices de mise à jour Cₘ sur base de l'équation: $\left\{{C}_{1}^{ʹ}…{C}_{l}^{ʹ}\right\} = \left\{{C}_{p}⁢{F}_{k - 1}…{C}_{q}⁢{F}_{k - 1}\right\}$
où 1 est un nombre entier inférieur ou égal à B, p est un indice de multiplication inférieur supérieur ou égal à un et q est un indice de multiplication supérieur inférieur ou égal à B.

7. Appareil récepteur (100, 150) selon l'une des revendications 1 à 6, dans lequel le chercheur (130) est adapté pour chercher les nouvelles possibles matrices de précodage C'ₘ, où m est un indice de table de codage allant de un à la grandeur de table de codage de matrices de mise à jour B, pour optimiser une capacité de canal de l'ordre de 50% à 100% de la capacité de canal maximale au moins sur base de l'estimation de canal de radiocommunication Hₖ, d'une puissance de bruit et des nouvelles possibles matrices de précodage C'ₘ, pour obtenir un indice de table de codage optimal mₒₚₜ selon ${m}_{opt} = arg max Capacity \left(H, {σ}^{2}, \left\{{C}_{m}\right\}\right) ,$
où σ² est la puissance de bruit ou variance.

8. Appareil récepteur (100, 150) selon la revendication 7, dans lequel le chercheur (130, 160) maximise la capacité sur base d'une détection d'une annulation d'interférence successive d'erreur quadratique moyenne minimale (MMSE-SIC).

9. Appareil récepteur (100, 150) selon l'une des revendications 1 à 8, dans lequel l'unité de traitement (120, 170) comprend par ailleurs un moyen de mémoire destiné à mémoriser la table de codage, la table de codage ayant au moins deux matrices de mise à jour destinées à être utilisées dans une opération de précodage, chaque matrice de mise à jour étant associée à un indice de matrice de mise à jour, les matrices de mise à jour étant calculées en générant une première matrice et en générant une deuxième matrice corrélée avec la première matrice par un degré de corrélation et en combinant la première matrice et la deuxième matrice, pour obtenir une seule matrice de mise à jour, dans lequel est utilisé, pour le calcul de matrices de mise à jour différentes, un degré de corrélation différent ou une première matrice différente et le même degré de corrélation.

10. Appareil récepteur (100, 150) selon l'une des revendications 1 à 9, comprenant par ailleurs un détecteur destiné à détecter un événement, et l'unité d'émission (140) étant adaptée pour émettre des informations de précodage absolues à un premier moment en réponse à une occurrence détectée de l'événement et pour émettre des informations de précodage différentielles à un deuxième moment différent du premier moment.

11. Appareil récepteur (100, 150) selon la revendication 10, dans lequel le détecteur est adapté pour détecter, comme événement, un écoulement d'une période prédéfinie depuis un moment antérieur auquel ont été envoyées les informations de précodage absolues ou, comme événement, une situation dans laquelle les informations de précodage absolues sont plus avantageuses pour une liaison de communication que les informations de précodage différentielles.

12. Appareil récepteur (100, 150) selon l'une des revendications 1 à 11, dans lequel une matrice de mise à jour est toujours une matrice carrée, c'est-à-dire ayant le même nombre de rangées et de colonnes.

13. Appareil récepteur (100, 150) selon l'une des revendications 1 à 12, adapté pour recevoir des signaux à porteuses multiples et opérationnel pour commander une opération de précodage dans chacune des ou dans un groupe de porteuses des signaux à porteuses multiples.

14. Procédé pour commander une opération de précodage dans un émetteur destiné à émettre simultanément de multiples flux de données dans un schéma d'émission ayant un premier nombre d'antennes d'émission et un deuxième nombre d'antennes de réception, le premier nombre et le deuxième nombre étant supérieurs à un, comprenant
estimer un canal de radiocommunication entre l'appareil émetteur et l'appareil récepteur sur base d'un signal reçu, pour déterminer une estimation de canal de radiocommunication;
fournir de possibles nouvelles matrices de précodage destinées à être appliqués aux multiples flux de données sur base de matrices de mise à jour mémorisées dans une table de codage de mise à jour et d'une ancienne matrice de précodage, les possibles nouvelles matrices de précodage, les matrices de mise à jour et l'ancienne matrice de précodage comportant, chacune, au moins deux rangées et au moins deux colonnes;
chercher une nouvelle matrice de précodage remplissant un critère d'optimisation sur base de l'estimation de canal de radiocommunication parmi les possibles nouvelles matrices de précodage; et
émettre un indice de matrice de mise à jour qui est associé à la nouvelle matrice de précodage à appliquer aux multiples flux de données.

15. Programme d'ordinateur ayant un code de programme adapté pour réaliser le procédé selon la revendication 14 lorsque le code de programme est exécuté sur un ordinateur.

16. Appareil émetteur (200, 250) pour émettre un signal précodé émettant simultanément de multiples flux de données, le signal étant précodé à l'aide d'une matrice de précodage mise à jour (Pₖ) dans un schéma d'émission ayant un premier nombre d'antennes d'émission et un deuxième nombre d'antennes de réception, le premier nombre et le deuxième nombre étant supérieurs à un, comprenant
une unité de réception (210) destinée à recevoir un indice de matrice de mise à jour reçu (mₒₚₜ);
un moyen de mémoire (220) destiné à mémoriser une table de codage ayant différentes matrices de mise à jour, chaque matrice de mise à jour (Cₘ) ayant y associée un indice de matrice de mise à jour (m), une matrice de mise à jour (Cₘ) ayant au moins deux rangées et au moins deux colonnes; et
un combineur (240, 265) destiné à combiner une matrice de précodage (Fₖ₋₁) utilisée antérieurement (245, 260) et la matrice de mise à jour (*C_{mₒₚₜ}* ) associée à l'indice de matrice de mise à jour reçu (mₒₚₜ), pour obtenir la matrice de précodage mise à jour destinée à être appliquée aux multiples flux de données.

17. Appareil émetteur (200, 250) selon la revendication 16, dans lequel le combineur (240, 265) est adapté pour obtenir la matrice de précodage mise à jour (Fₖ) par multiplication, la multiplication ayant la matrice de précodage utilisée antérieurement (Fₖ₋₁) et la matrice de mise à jour (*C*_{*m*_{*op*t}}) comme partenaires de multiplication et la matrice de précodage utilisée antérieurement (Fₖ₋₁) étant multipliée du côté droit.

18. Appareil émetteur (200, 250) selon l'une des revendications 16 ou 17, dans lequel le deuxième nombre d'antennes de réception est supérieur à un, et une matrice de précodage (Fₖ₋₁, Fₖ) est une matrice carrée.

19. Appareil émetteur (200, 250) selon l'une des revendications 16 à 18, dans lequel le premier et le deuxième nombre sont tels qu'une matrice de précodage (Fₖ, Fₖ₋₁) a plus de rangées que de colonnes.

20. Appareil émetteur (200, 250) selon l'une des revendications 16 à 19, dans lequel une matrice de mise à jour (Cₘ) est une matrice carrée, une matrice symétrique ou une matrice symétrique conjuguée.

21. Appareil émetteur (200, 250) selon l'une des revendications 16 à 20, adapté pour initialiser la matrice de précodage (Fₖ) périodiquement sur une échelle de temps prédéfinie ou à la réception d'un signal spécial pour l'initialisation ou à la réception d'un indice de matrice de mise à jour ou à la réception d'une commande d'effectuer l'initialisation.

22. Appareil émetteur (200, 250) selon l'une des revendications 16 à 21, dans lequel le combineur (240, 265) est adapté pour multiplier la matrice de précodage utilisée antérieurement Pₖ₋₁, k étant un indice de temps et k-1 indiquant un indice de temps antérieur, par la matrice de mise à jour C*_{mₒₚₜ}*, pour obtenir une matrice précodée mise à jour Fₖ sur base de l'équation ${F}_{k} = {C}_{{m}_{opt}} ⁢ {F}_{k - 1}$

23. Appareil émetteur (200, 250) selon l'une des revendications 16 à 22, comprenant par ailleurs un précodeur destiné à appliquer la matrice de précodage utilisée antérieurement (Fₖ₋₁) ou la matrice de précodage mise à jour (Fₖ) à un signal d'émission.

24. Appareil émetteur (200, 250) selon l'une des revendications 16 à 23, dans lequel la table de codage a au moins deux matrices de mise à jour destinées à être utilisées dans une opération de précodage, chaque matrice de mise à jour étant associée à un indice de matrice de mise à jour, les matrices de mise à jour étant calculées en générant une première matrice, en générant une deuxième matrice corrélée avec la première matrice par un degré de corrélation, et en combinant la première matrice et la deuxième matrice, pour obtenir une seule matrice de mise à jour, où il est utilisé, pour le calcul de matrices de mise à jour différentes, un degré de corrélation différent ou une première matrice différente et le même degré de corrélation.

25. Appareil émetteur (200, 250) selon l'une des revendications 16 à 24, comprenant par ailleurs un détecteur destiné à détecter un événement et un moyen pour mettre à jour la matrice de précodage par des informations de précodage absolues à un premier moment en réponse à une occurrence détectée de l'événement ou pour mettre à jour la matrice de précodage par des informations de précodage différentielles à un deuxième moment différent du premier moment.

26. Appareil émetteur (200, 250) selon la revendication 25, dans lequel le détecteur est adapté pour détecter, comme événement, un écoulement d'une période prédéfinie depuis un moment antérieur auquel ont été reçues les informations de précodage absolues ou, comme événement, une situation dans laquelle les informations de précodage absolues sont plus avantageuses pour une liaison de communication que les informations de précodage différentielles.

27. Appareil émetteur (200, 250) selon l'une des revendications 16 à 26, adapté pour émettre des signaux à porteuses multiples et opérationnel pour commander une opération de précodage dans chacune des ou dans un groupe de porteuses dans les signaux à porteuses multiples.

28. Procédé pour émettre un signal précodé en émettant simultanément de multiples flux de données, le signal étant précodé à l'aide d'une matrice de précodage dans un émetteur dans un schéma d'émission ayant un premier nombre d'antennes d'émission et un deuxième nombre d'antennes de réception, le premier nombre et le deuxième nombre étant supérieurs à un, comprenant
recevoir un indice de matrice de mise à jour reçu (mₒₚₜ);
mémoriser une table de codage ayant différentes matrices de mise à jour, chaque matrice de mise à jour (Cₘ) ayant y associé un indice de matrice de mise à jour, une matrice de mise à jour (Cₘ) ayant au moins deux rangées et au moins deux colonnes;
combiner une matrice de précodage utilisée antérieurement et la matrice de mise à jour (C*_{mₒₚₜ}*) associée à l'indice de matrice de mise à jour reçu (mₒₚₜ), pour obtenir la matrice de précodage destinée à être appliquée aux multiples flux de données.

29. Programme d'ordinateur ayant un code de programme adapté pour réaliser le procédé selon la revendication 28 lorsque le code de programme est exécuté sur un ordinateur.

30. Signal de rétroaction de précodage émis, ayant un format de signal de rétroaction pour réaliser le procédé de mise à jour selon la revendication 28 lorsque le signal de rétroaction est entré dans un émetteur selon la revendication 16, le signal de rétroaction comprenant un indice de matrice de mise à jour associé à une matrice de mise à jour à combiner à l'émetteur avec une matrice de précodage utilisée antérieurement, pour obtenir une matrice de précodage mise à jour, ladite matrice de mise à jour ayant au moins deux rangées et au moins deux colonnes et étant incluse dans une table de codage à l'émetteur.
